# EUROPEAN PATENT APPLICATION

(11) **EP 3 398 704 A1**
(43) Date of publication of application: **07.11.2018**
(21) Application number: 18169295.5
(22) Date of filing: 25.04.2018
(51) Int. Cl.: B23D 57/00, B28D 5/04

(54) **WIRE SUPPLYING AND RECEIVING DEVICE FOR A WIRE SAW, INGOT SLICING WIRE SAW INCLUDING THE SAME, AND METHOD OF SLICING INGOT**

(30) Priority: 28.04.2017 TW 106114242
(71) Applicant: AUO Crystal Corporation, Taichung City 421 (TW)
(72) Inventor: LEI, Shih-Chueh, 42152 Taichung City (TW); KUO, Chih-Yang, 42152 Taichung City (TW); CHEN, Chan-Tien, 42152 Taichung City (TW)
(74) Representative: Stöckeler, Ferdinand

(57) **Abstract**

A wire supplying and receiving device (4) includes a moving unit (41) including a rail (411) along a first horizontal direction (X), a first wire winding unit (42) disposed on the rail (411) and rotatable about an axis (LI) parallel to the first horizontal direction (X), and a second wire winding unit (43) on the rail (411) and rotatable about the axis (L1). At least one of the first and second wire winding units (42, 43) is movable along the first horizontal direction (X). The wire supplying and receiving device (4) is convertible between a connected state, where the first and second wire winding units (42, 43) are adjacent to each other, and a disconnected state, where the first and second wire winding units (42, 43) are spaced apart from each other. An ingot slicing wire saw (100) and a method for slicing ingot are also provided.

## Description

The disclosure relates to a wire supplying and receiving device, an ingot slicing wire saw including the same, and a method of slicing ingot.

Conventionally, ingots are sliced by metal wires carrying cutting slurry to form a plurality of wafers. The cutting slurry is made by mixing particles and liquid or oil. In response to rising environmental concerns and rising wafer demands, the abovementioned slicing technique is gradually abandoned. Nowadays, wire saws mounted with abrasive particles (e.g., diamond particles) are used for slicing the ingots.

In practical application, the wire saws are wound around two main rollers of an ingot slicing apparatus, and around a first wire winding roller and a second wire winding roller that are located opposite to each other with respect to the main rollers to form a wire net between the main rollers. When the ingot is moved into a space between the main rollers, the wire net slices the ingot. The sawing wires are either moved unidirectionally from the first wire winding roller onto the second wire winding roller or moved reciprocally between the main rollers. The latter is more economic in terms of sawing wire usage, and is widely used. However, since the sawing wires are coiled around the first and second wire winding rollers, when portions of the sawing wires are being wound on or leaving the rollers, they move relative to the remaining portions of the sawing wires coiled thereunder, resulting in undesirable wear. Moreover, the degree of wear of the abrasive particles should be taken into account when performing slicing action.

Taiwanese Invention Patent Application No. 201501844 A teaches a method of managing sawing wires. TW 201501844 A discloses a first wire winding roller and a second wire roller, each of which has a main wire winding region and an auxiliary wire winding region adjacent to the main wire winding region. Unused sections (i.e., that have been not yet used to cut) of the sawing wires and used sections (i.e., that have been used to cut) of the sawing wires are wound on different wire winding regions to avoid wear occurring between unused and used sections of the sawing wires sawing wires. However, the quality of sliced wafers is not good enough.

Therefore, an object of the disclosure is to provide a wire supplying and receiving device for a wire saw, an ingot slicing wire saw including the same, and a method of slicing ingot that can alleviate at least one of the drawbacks of the prior art.

According to a first aspect of the present disclosure, the wire supplying and receiving device for a wire saw includes a moving unit, a first wire winding unit and a second wire winding unit.

The moving unit includes a rail that extends along a first horizontal direction. The first wire winding unit is disposed on the rail and is rotatable about an axis parallel to the first horizontal direction. The second wire winding unit is disposed on the rail and is rotatable about the axis. At least one of the first wire winding unit and the second wire winding unit is movable on the rail along the first horizontal direction. The wire supplying and receiving device is convertible between a connected state, where the first and second wire winding units are adjacent to each other, and a disconnected state, where the first wire winding unit and the second wire winding unit are spaced apart from each other in the first horizontal direction.

According to a second aspect of the present disclosure, the ingot slicing wire saw is adapted to be mounted with a sawing wire for slicing an ingot.

The ingot slicing wire saw includes a machine bed, a roller device, a feeding device and two of the aforementioned wire supplying and receiving devices.

The roller device includes two main rollers rotatably connected to the machine bed and horizontally spaced apart from each other. The feeding device is disposed on the machine bed and above the roller device, and includes a feeding seat adapted for the ingot to be mounted thereon and operable to carry the ingot to move between the main rollers. The wire supplying and receiving devices are respectively disposed at opposite sides of the machine bed. The sawing wire is wound on the wire supplying and receiving devices and the main rollers of the roller device to form a wire net having a plurality of sawing sections spanning a space between the main rollers and adapted for slicing the ingot.

According to a third aspect of the present, disclosure , the method for slicing an ingot includes:
(A) preparing a bundle of sawing wire, a roller device for the sawing wire to be wound thereon and for driving movement of the sawing wire, a feeding device for the ingot to be mounted thereon and for moving the ingot vertically relative to the roller device, and two of the wire supplying and receiving devices as claimed in claim 1 that are respectively disposed at opposite sides of the roller device, wherein the roller device includes two rollers that are spaced apart from each other in a second horizontal direction perpendicular to the first horizontal direction, and the wire supplying and receiving devices are respectively defined as a first wire supplying and receiving device and a second wire supplying and receiving device;
(B) converting each of the first and second wire supplying and receiving devices into the disconnected state, winding the bundle of the sawing wire onto the second wire winding unit of the second wire supplying and receiving device, and winding the sawing wire on the rollers to form a wire net between the rollers, followed by fastening an end of the sawing wire to the second wire winding unit of the first wire supplying and receiving device, followed by converting the first wire supplying and receiving device into the connected state, followed by rotating the rollers of the roller device such that a first length of the sawing wire is unwound from the second wire winding unit of the second wire supplying and receiving device and is wound onto the first wire winding unit of the first wire supplying and receiving device, the first length of the sawing wire being for slicing the ingot;
(C) converting the second wire supplying and receiving device into the connected state, followed by rotating the rollers of the roller device such that a second length of the sawing wire is unwound from the first wire winding unit of the first wire supplying and receiving device and is wound onto the first wire winding unit of the second wire supplying and receiving device; and
(D) moving the feeding device downwardly toward the wire net and rotating the rollers of the roller device in alternate clockwise and counterclockwise directions to slice the ingot into a plurality of wafers, a third length of the sawing wire is unwound from the first wire winding unit of the second wire supplying and receiving device and is wound onto the first wire winding unit of the first wire supplying and receiving device.

Other features and advantages of the disclosure will become apparent in the following detailed description of the embodiments with reference to the accompanying drawings, of which:
FIG. 1 is a perspective view of an embodiment of an ingot slicing wire saw according to the present disclosure;
FIG. 2 is a side view of the embodiment;
FIG. 3 is a schematic view showing a sawing wire wound on two main rollers of a roller device of the embodiment;
FIG. 4 is a schematic view showing the sawing wire being installed on the embodiment;
FIG. 5 is a schematic view showing an alternative of the embodiment;
FIG. 6 is a fragmentary perspective view of the embodiment;
FIG. 7 is a fragmentary enlarged view of the embodiment, illustrating one of wire supplying and receiving devices of the embodiment;
FIG. 8 is a perspective view of the one of the wire supplying and receiving devices of the embodiment;
FIG. 9 is a perspective view of a first wire winding unit of the one of the wire supplying and receiving devices of the embodiment;
FIG. 10 is a fragmentary perspective view of a wire guiding seat of the one of the wire supplying and receiving devices of the embodiment;
FIG. 11 is a side view showing the one of the wire supplying and receiving devices of the embodiment being in a disconnected state, where the first wire winding unit and a second wire winding unit of the one of the wire supplying and receiving devices of the embodiment are separated from each other;
FIG. 12 is a side view showing the one of the wire supplying and receiving devices of the embodiment being in a connected state, where the second wire winding unit engages the first wire winding unit;
FIG. 13 is a partially sectional view of the one of the wire supplying and receiving devices in the connected state;
FIG. 14 is a schematic view showing an alternative of the one of the wire supplying and receiving devices, in which the first and second wire winding units are both solid;
FIG. 15 is a schematic view of another alternative of the embodiment;
FIG. 16 is a schematic view showing the one of the wire supplying and receiving devices being provided with a wire guiding member;
FIG. 17 is a schematic view showing one of tension adjusting devices of the embodiment;

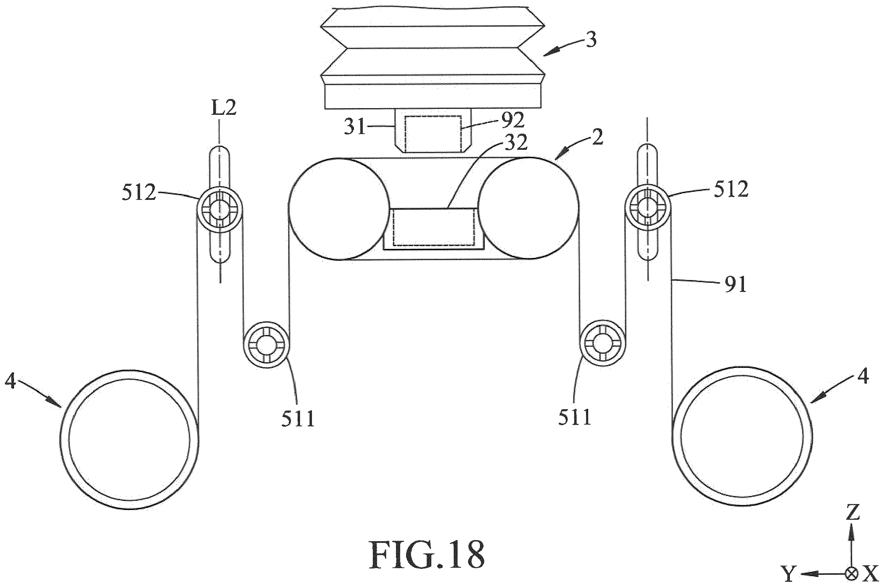

FIG. 18 is a schematic view showing the tension adjusting devices operating in cooperation with the wire supplying and receiving devices of the embodiment;
FIG. 19 is a perspective view showing a first alternative of the one of the tension adjusting devices of the embodiment;
FIG. 20 is a schematic view of the first alternative of the one of the tension adjusting devices of the embodiment;

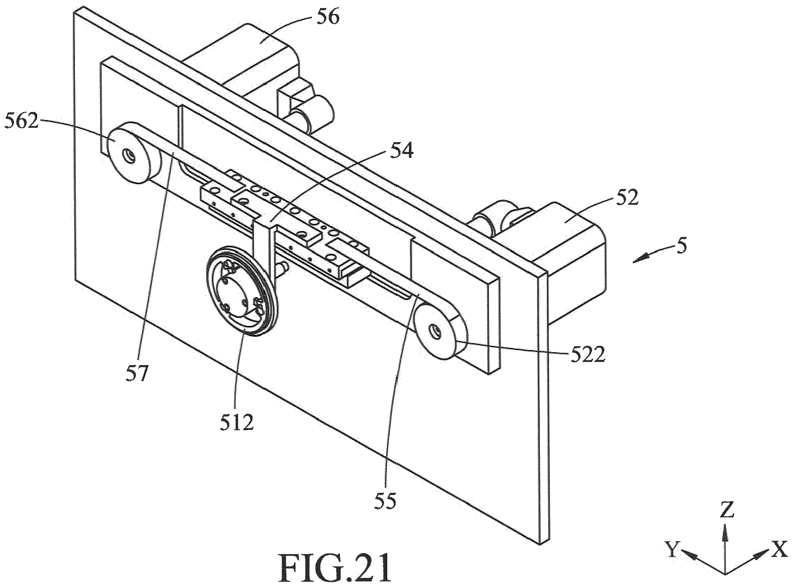

FIG. 21 is a perspective view showing a second alternative of the one of the tension adjusting devices of the embodiment;

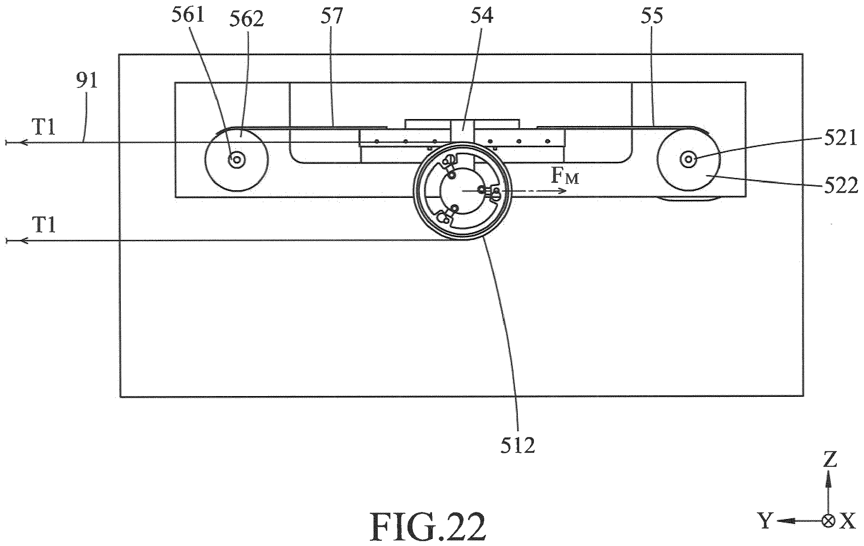

FIG. 22 is a schematic view of the second alternative of the one of the tension adjusting devices of the embodiment;
FIG. 23 is a flow chart of a first embodiment of a method of slicing ingot according to the present disclosure;
FIG. 24 is a schematic view showing a step 1A of the first embodiment of the method;
FIGS. 25 and 26 are schematic views showing step 1B of the first embodiment of the method;
FIG. 27 is a schematic view showing step 1C of the first embodiment of the method;
FIG. 28 is a schematic view showing step 1D of the first embodiment of the method;
FIG. 29 is a schematic view showing step 1E of the first embodiment of the method;
FIG. 30 is a schematic view showing step 1F of the first embodiment of the method;
FIG. 31 is a schematic view showing step 1G of the first embodiment of the method;
FIG. 32 is a schematic view showing an alternative of the step 1G (step 1G') of the first embodiment of the method;
FIG. 33 is a schematic view showing step 1H of the first embodiment of the method;
FIG. 34 is a flow chart of a second embodiment of the method of slicing ingot according to the present disclosure;
FIG. 35 is a schematic view showing step 2C of the second embodiment of the method;
FIG. 36 is a schematic view showing step 2D of the second embodiment of the method;
FIGS. 37 and 38 are schematic views showing step 2E of the second embodiment of the method;
FIGS. 39 to 41 are schematic views showing step 2F of the second embodiment of the method; and
FIGS. 42 and 43 are schematic views showing step 2H of the second embodiment of the method.

Before the disclosure is described in greater detail, it should be noted that where considered appropriate, reference numerals or terminal portions of reference numerals have been repeated among the figures to indicate corresponding or analogous elements, which may optionally have similar characteristics.

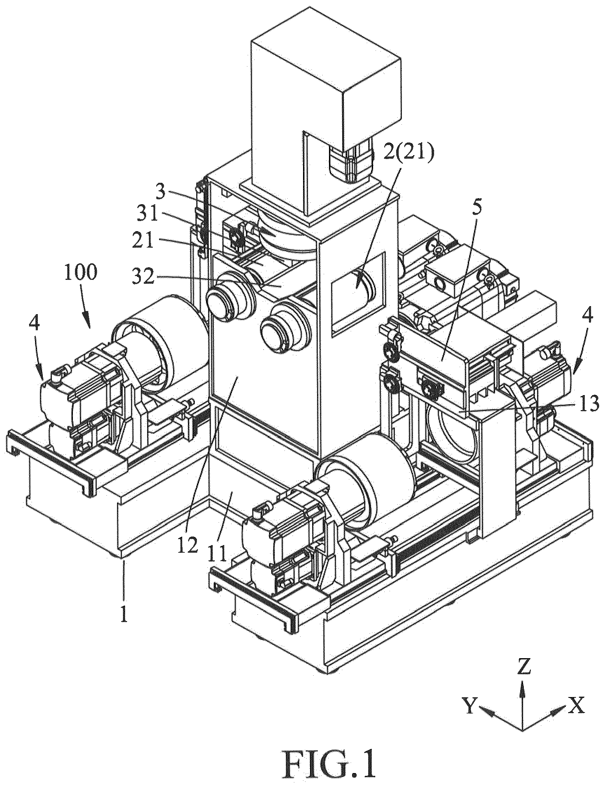

Referring to FIGs 1 to 4, an embodiment of an ingot slicing wire saw 100 is adapted to be mounted with a sawing wire 91 for slicing an ingot 92. The ingot slicing wire saw 100 includes a machine bed 1, a roller device 2, a feeding device 3, two wire supplying and receiving devices 4, and two tension adjusting devices 5. A three-dimensional coordinate system having a first horizontal direction (X), a second horizontal direction (Y) and a height direction (Z) that are perpendicular to each other is defined for illustration purpose.

Referring to FIGS. 1, 2 and 5, the machine bed 1 includes a base section 11, a slicing seat section 12 and two roller installation sections 13. The slicing seat section 12 is disposed on the base section 11, extends upwardly along the height direction (Z), and is mounted with the roller device 2. The roller installation sections 13 are respectively disposed at opposite sides of the slicing seat section 12 along the second horizontal direction (Y).

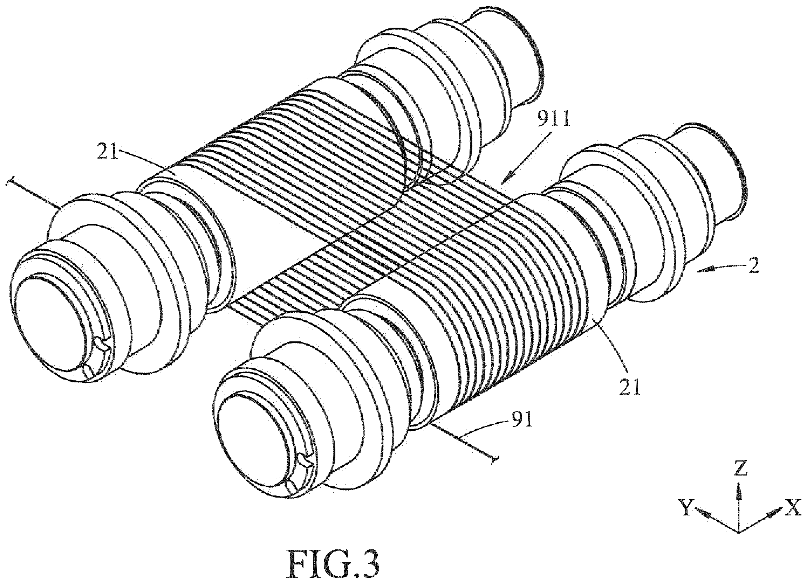

The roller device 2 includes two main rollers 21 rotatably connected to the machine bed 1 and horizontally spaced apart from each other. The sawing wire 91 is wound on the wire supplying and receiving devices 4 and the main rollers 21 of the roller device 2 to form a wire net 911 (see FIG. 3) having a plurality of sawing sections spanning a space between the main rollers 21 and adapted for slicing the ingot 92. When the ingot slicing wire saw 100 is used for slicing the ingot 92, the sawing sections of the wire net 911 are moved reciprocally in the second horizontal direction (Y) by the main rollers 21 to slice the ingot 92.

Referring to FIGS. 1, 2 and 4, the feeding device 3 is disposed on the machine bed 1 and above the roller device 2, and includes a feeding seat 31 and a broken wafer receiving box 32. The feeding seat 31 is adapted for the ingot 92 to be mounted thereon and is operable to carry the ingot 92 to move between the main rollers 21. The broken wafer receiving box 32 is located under the feeding seat 31, and is used for receiving broken pieces of the ingot 92.

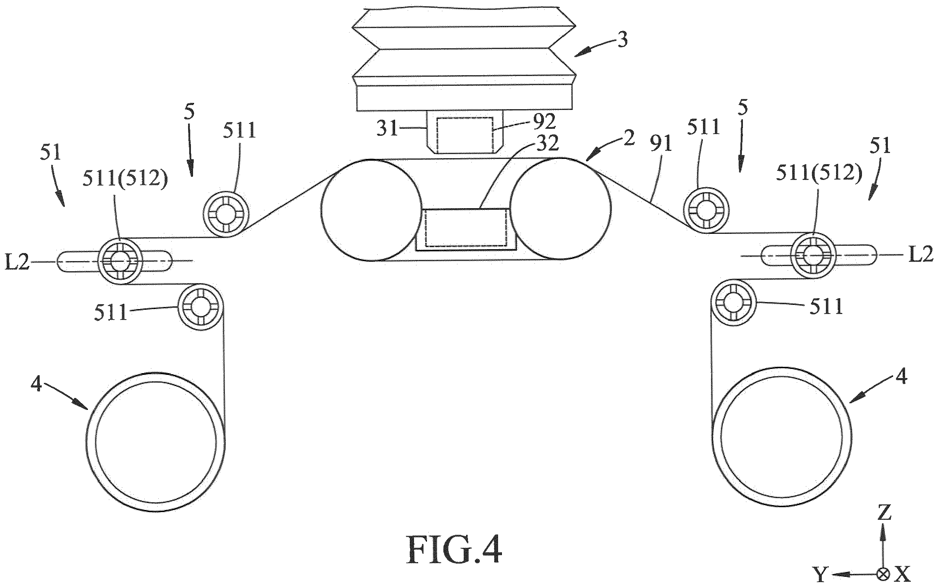

The wire supplying and receiving devices 4 are respectively located at opposite sides of the machine bed 1. As shown in FIG. 4, the sawing wire 91 sequentially extends on one of the wire supplying and receiving devices 4, the roller device 2 and the other one of the wire supplying and receiving devices 4.

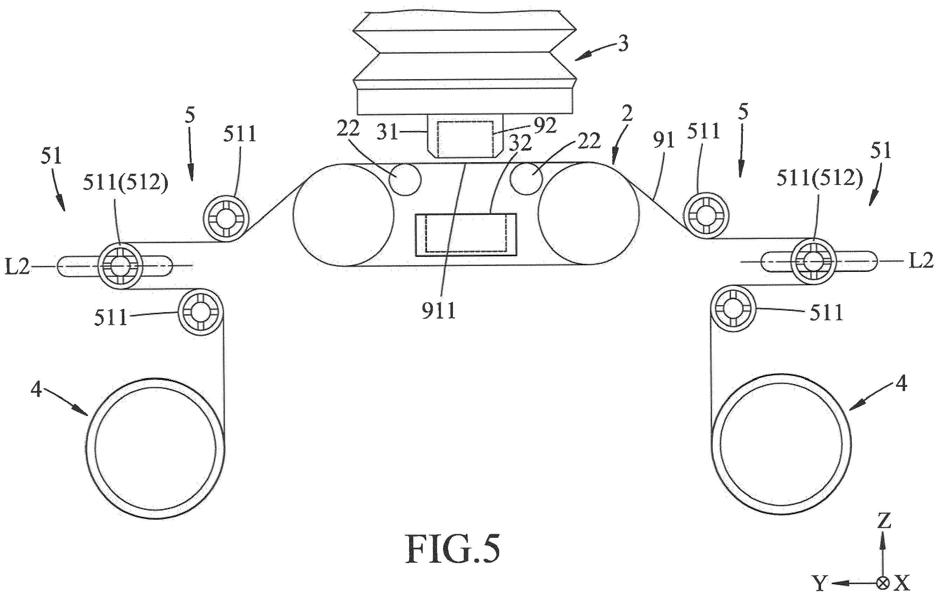

Referring to FIG. 5, in an alternative of the embodiment, the roller device 2 further includes two auxiliary rollers 22 that are disposed below the feeding device 3 and that are disposed between the main rollers 21. Lowermost side of each of the auxiliary rollers 22 is not higher than uppermost side of each of the main rollers 21. Diameter of each of the auxiliary rollers 22 is smaller than one-half of diameter of each of the main rollers 21. In this alternative of the embodiment, the sawing wire 91 is wound on the wire supplying and receiving devices 4, the main rollers 21 and the auxiliary rollers 22 to form the wire net 911 having the sawing sections spanning a space between the auxiliary rollers 22 and adapted for slicing the ingot 92.

It is worth mentioning that the synergy between the wire supplying and receiving devices 4 and the auxiliary rollers 22 contributes to the quality and stability of the sawing wire 91 during slicing. Moreover, the relative position and size between the main rollers 21 and the auxiliary rollers 22 also contributes to the quality and stability of the sawing wire 91 during slicing. Such configuration allows the use of sawing wire 91 with smaller diameter (such as 40∼60 micrometer), and reduces the possibility of wire breakage, especially in the case of using the hollow auxiliary rollers 22.

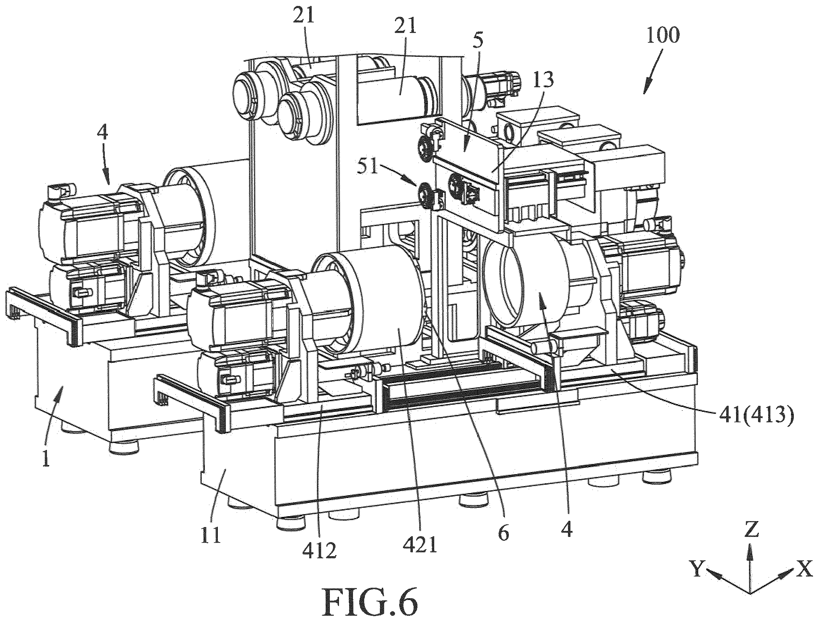

Referring to FIGS. 6 to 8, each of the wire supplying and receiving devices 4 includes a moving unit 41, a first wire winding unit 42, a second wire winding unit 43 and a driving unit 44.

The structures of only one of the wire supplying and receiving devices 4 is described in detail hereinafter for the sake of brevity.

The wire supplying and receiving device 4 includes two rails 411, a first moving seat 412 and a second moving seat 413. Each of the rails 411 extends along the first horizontal direction (X). The first and second moving seats 412, 413 are movably disposed on the rails 411. In certain embodiments, the wire supplying and receiving device 4 may include only one rail 411, as long as the first and second moving seats 412, 413 mounted on the rail 411 can move along the first horizontal direction (X). In certain embodiments, the rails 411 may be non-continuous, as long as there are rails provided in the movement range of the first and second moving seats 412, 413. The first wire winding unit 42 and the second wire winding unit 43 are rotatably and respectively mounted to the first moving seat 412 and the second moving seat 413. Specifically, each of the first wire winding unit 42 and the second wire winding unit 43 extends along the first horizontal direction (X), and is rotatable about an axis (L1) parallel to the first horizontal direction (X).

Referring to FIGS. 6, 8 and 9, the first wire winding unit 42 of the wire supplying and receiving device 4 includes a first rotating member 421 and a wire guiding seat. 6. The first rotating member 421 is rotatably mounted to the first moving seat 412. The wire guiding seat 6 is detachably mounted to the first rotating member 421.

The first rotating member 421 is hollow and has an open end 422. The wire guiding seat 6 is detachably disposed at the open end 422 of the first rotating member 421, and includes a surrounding wall 61 that extends about the axis (L1), and at least two angularly equidistant wire guiding members 62 that are disposed on the surrounding wall 61.

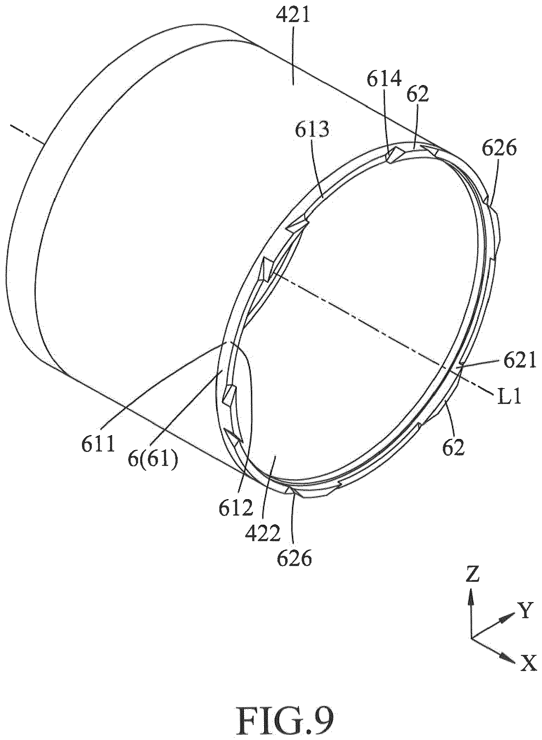

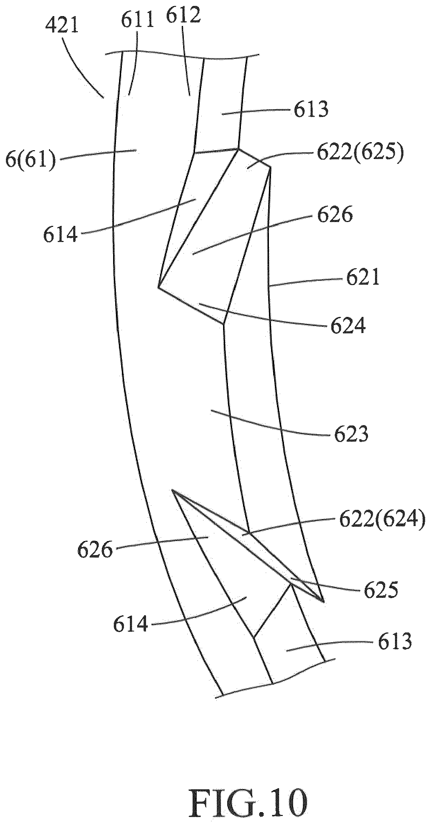

Referring to FIGS. 9 and 10, the surrounding wall 61 of the wire guiding seat 6 has a first side portion 611 that is connected to the end of the first rotating member 421, and a second side portion 612 that is opposite to the first side portion 611 and that is used for the wire guiding members 62 to be disposed thereon. The second side portion 612 of the surrounding wall 61 of the wire guiding seat 6 has a plurality of connecting surfaces 613, and a plurality of extending surfaces 614. Each of the connecting surfaces 613 is connected between adjacent two of the wire guiding members 62. The number of the extending surfaces 614 is twice the number of the connecting surfaces 613. Each of the extending surfaces 614 is connected to a corresponding one of the connecting surfaces 613.

Each of the wire guiding members 62 has an inner side surface 621 that is proximate to the axis (L1), two guiding surfaces 622 that respectively extend from opposite ends of the inner side surface 621 away from the axis (L1) and toward each other, and an outer side surface 623 that interconnects the guiding surfaces 622 and that is spaced apart from the inner side surface 621. Each of the guiding surfaces 622 is of a trapezoid shape, and has a wide base side 624 that is connected to the outer side surface 623 and a narrow base side 625 that is connected to the inner side surface 621. In this embodiment, each of the extending surfaces 614 cooperates with an adjacent one of the guiding surfaces 622 of a corresponding one of the wire guiding members 62 to define a wire guiding grooves 626 adapted for extension of the sawing wire 91 therethrough.

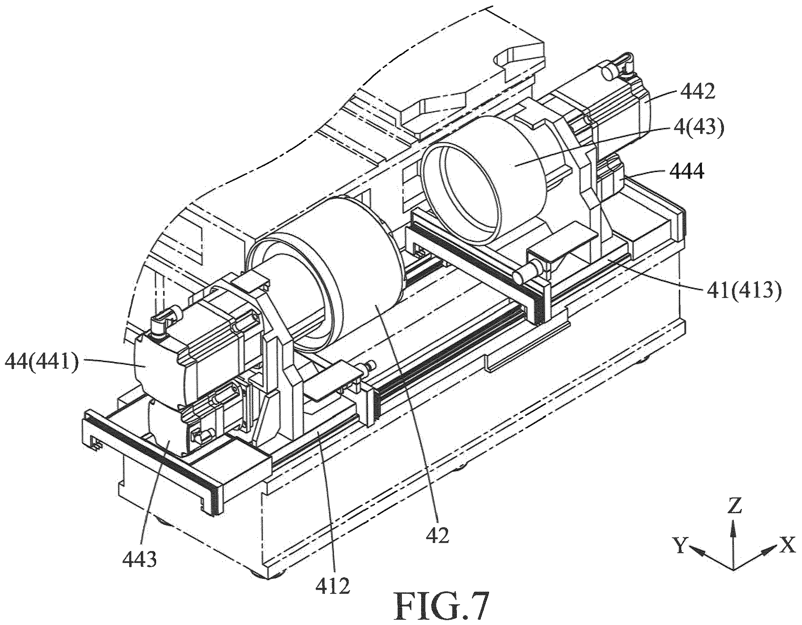

Referring to FIGS. 7, 8 and 11, the second wire winding unit 43 of the wire supplying and receiving device 4 is disposed on the rails 411, extends along the first horizontal direction (X), and is rotatable about the axis (L1). The second wire winding unit 43 includes a second rotating member 431 that is rotatably mounted to the second moving seat 413, and extends along the first horizontal direction (X) . The open end 422 of the first rotating member 421 is used for the second rotating member 431 to extend therethrough.

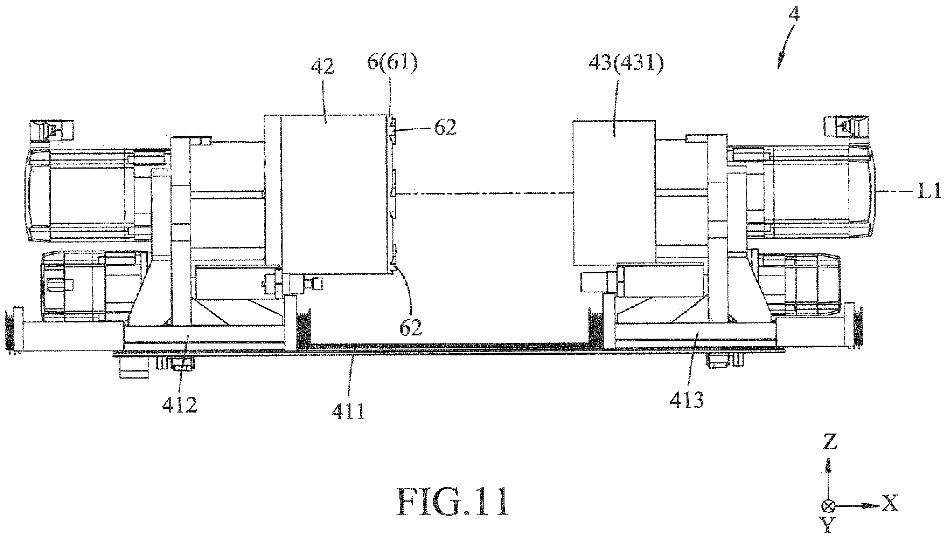

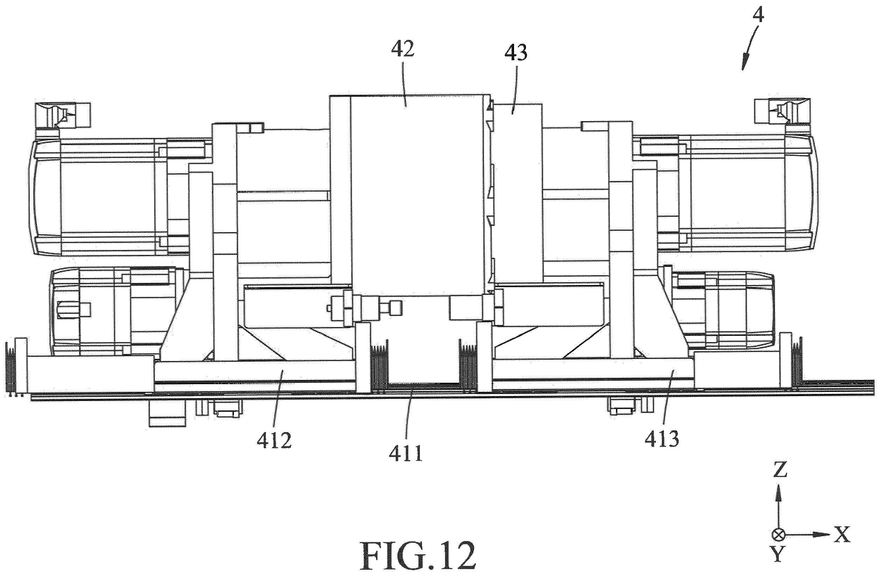

Referring to FIGS. 11 to 13, in this embodiment, at least one of the first wire winding unit 42 and the second wire winding unit 43 is movable on the rails 411 along the first horizontal direction (X). The first wire winding unit 42 and the second wire winding unit 43 are respectively carried by the first and second moving seats 412, 413 to move on the rails 411 such that the wire supplying and receiving device 4 is convertible between a connected state (see FIG. 12) and a disconnected state (see FIG. 11).

In the connected state, the first moving seat 412 and the second moving seat 413 are adjacent to each other. When the wire supplying and receiving device 4 is converted from the disconnected state into the connected state, the first and second moving seats 412, 413 are moved toward each other along the first horizontal direction (X). When the wire supplying and receiving device 4 is converted from the connected state into the disconnected state, the first moving seat 412 and the second moving seat 413 are moved away from each other.

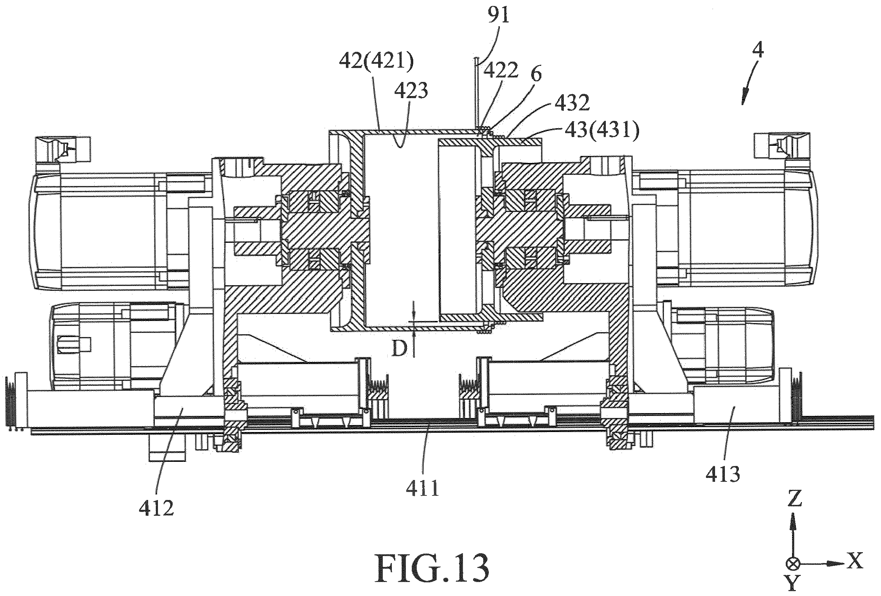

Referring to FIGS. 12 and 13, in the connected state, an inner surrounding surface 423 of the first rotating member 421 is spaced apart from an outer surrounding surface 432 of the second rotating member 431 at a distance (D) (see FIG. 13). Also in the connected state, an end of the first rotating member 421 is sleeved on an end of the second rotating member 431 (i.e., the first rotating member 421 surrounds the second rotating member 431). Referring to FIGS. 11 and 13, it is worth mentioning that the wire guiding members 62 facilitates the sawing wire 91 to be smoothly wound on both the first and second wire winding units 42, 43 when the wire supplying and receiving device 4 is in the connected state, thereby reducing the risk of wire breakage.

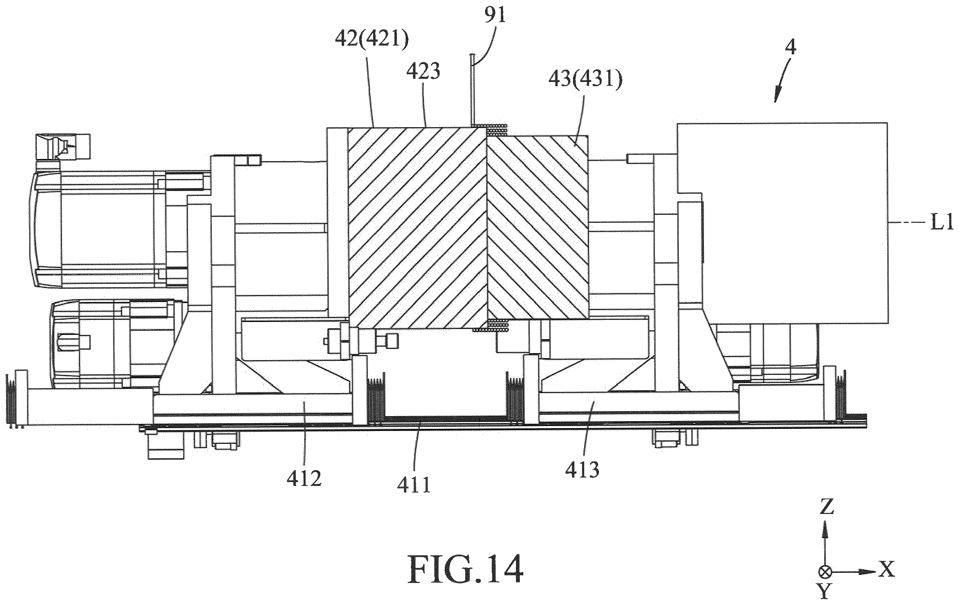

Referring to FIG. 14, in an alternative of the wire supplying and receiving device 4, the first and second rotating members 421, 431 are both solid, and the first and second rotating members 421, 431 abut against each other when the wire supplying and receiving device 4 is in the connected state. It is worth mentioning that the sawing wire 91 is first wound on the second rotating member 431 having a smaller diameter than the first rotating member 421. During winding of the sawing wire 91 around the second rotating member 431, when the inner diameter of the outmost coil of the sawing wire 91 abutting against an end surface of the first rotating member 421 is increased to be approximate to the diameter of the outer surrounding surface 421 of the first rotating member 421, the sawing wire 91 is wound onto the first rotating member 421, thereby reducing the possibility of wire breakage. In certain embodiment, it is worth mentioning that at least one of the first rotating member 421 and the second rotating member 431 may be hollow, and the sawing wire 91 may be wound onto the first rotating member 421 with the assistance of the wire guiding members 62.

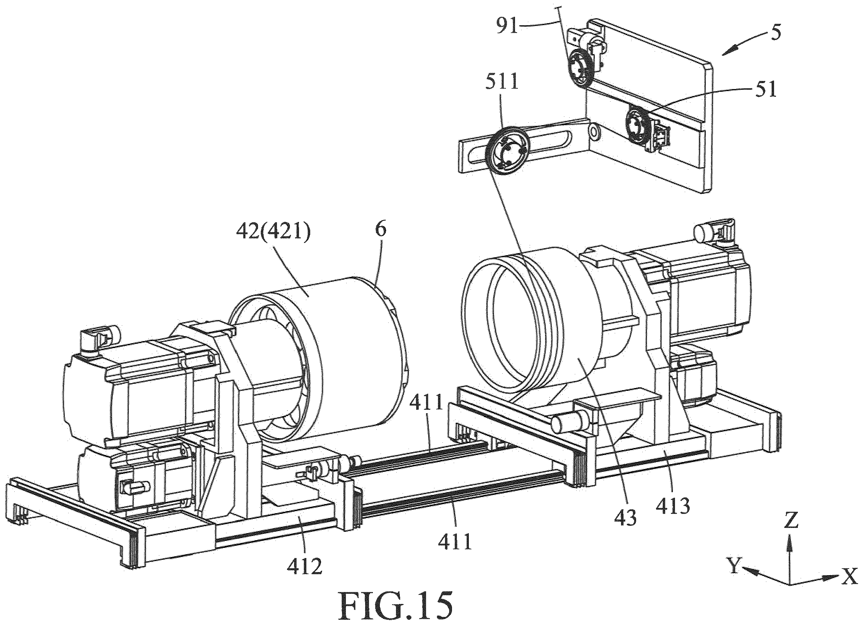

Referring to FIG. 15, in another alternative of the embodiment, the second wire winding unit 43 is fixed on the rails 411. A pulley unit 51 is provided, and includes an idler 511 that is adjacent to the second wire winding unit 43 and that is movable along the first horizontal direction (X) to control the sawing wire 91 to be wound on the first and second wire winding units 42, 43.

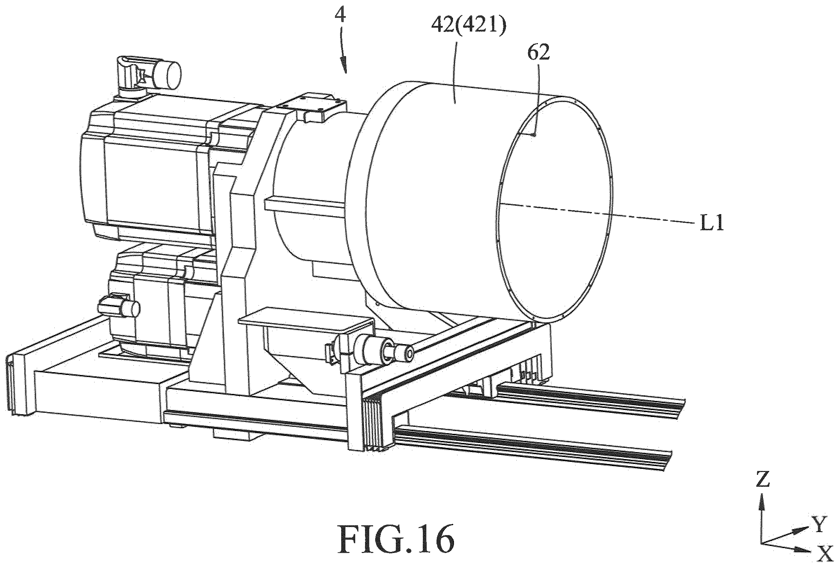

Referring to FIG. 16, alternatively, there may be only one wire guiding member 62 as long as the wire guiding member 62 is disposed at the open end 422 of the first rotating member 421, extends along the first horizontal direction (X), and is capable of guiding the sawing wire 91 from the second wire winding unit 43 toward the first wire winding unit 42. In certain embodiments, the wire guiding member 62 is a screw.

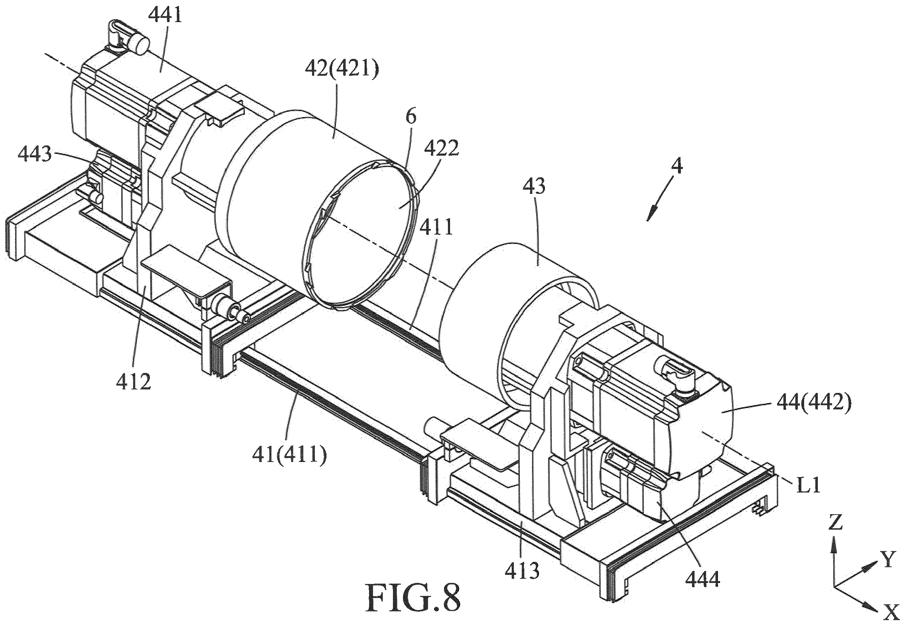

Referring to FIGS. 7 and 8, the driving unit 44 of the wire supplying and receiving device 4 includes a first rotating motor 441 for driving rotation of the first wire winding unit 42, a second rotating motor 442 for driving rotation of the second wire winding unit 43, a first moving motor 443 for driving movement of the first moving seat 412 relative to the second moving seat 413, and a second moving motor 444 for driving movement of the second moving seat 413 relative to the first moving seat 412.

Referring to FIGS. 1, 2 and 4, the tension adjusting devices 5 are respectively located at opposite sides of the roller device 2 and respectively disposed on the roller installation sections 13. Each of the tension adjusting devices 5 includes the pulley unit 51 that is disposed between the roller device 2 and a corresponding wire supplying and receiving device 4 and that is adapted for adjusting extending direction of the sawing wire 91. In this embodiment, the pulley unit 51 includes a plurality of the idlers 511 for adjusting extending direction of the sawing wire 91.

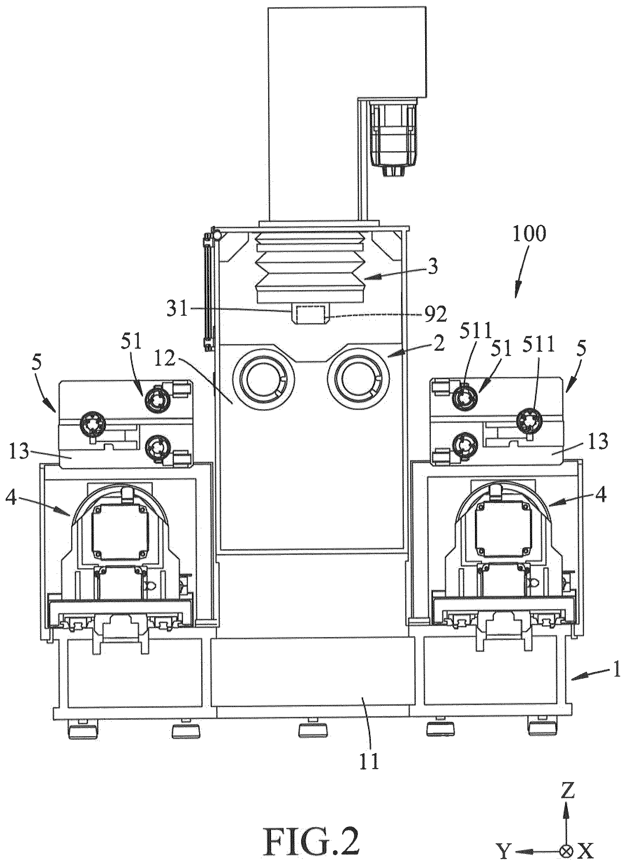

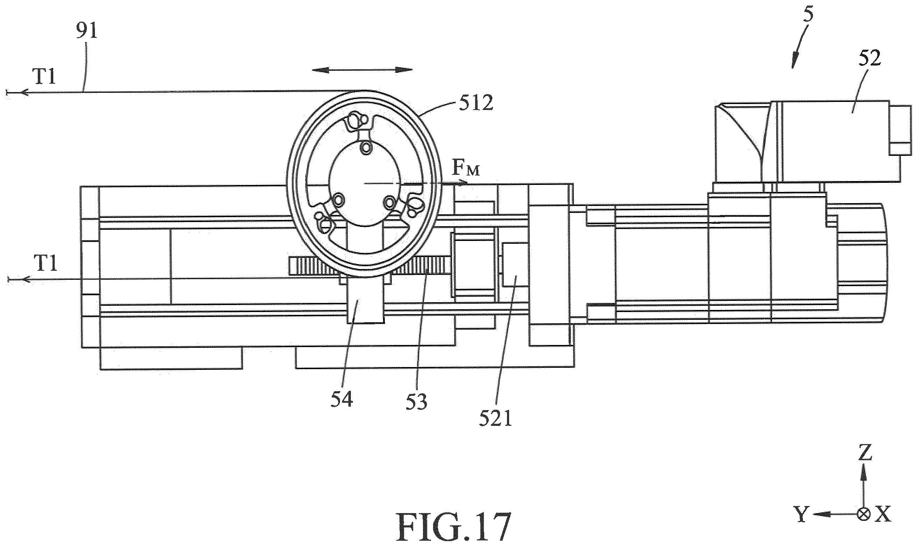

Referring to FIGS. 2, 4 and 17, one of the idlers 511 is defined as a wire guiding roller 512 that is configured to be movable along a moving path (L2) parallel to the second horizontal direction (Y), and the remaining idlers 511 are rotatable and not movable. In this embodiment, each of the tension adjusting devices 5 further includes a third rotating motor 52 that is disposed on a corresponding one of the roller installation sections 13 and that includes an output shaft 521, a screw rod 53 that is connected to the output shaft 521 of the third rotating motor 52 and that is rotatable by the third rotating motor 52, and a wire guiding roller installation seat 54 that is threadedly connected to the screw rod 53 such that rotation of the output shaft 521 is converted into movement of the wire guiding roller installation seat 54. Extension direction of the screw rod 53 is parallel to the moving direction in the moving path (L2) of the wire guiding roller 512 as shown by the double arrow of FIG. 17. Fixing mechanism of the third rotating motor 52, and the wire guiding roller installation seat 54 of each of the tension adjusting devices 5 are well known in the art, and are therefore not elaborated for the sake of brevity. It is worth mentioning that the moving direction of the wire guiding roller 512 is not limited to be parallel to the second horizontal direction (Y) as long as the sawing wire 91 bears a tension force when slicing the ingot 92 and the tension force is exerted in a direction parallel to the moving path (L2).

Each of the first rotating motor 441, the second rotating motor 442 and the third rotating motor 52 is a servo motor. The third rotating motor 52 is capable of receiving a position signal of the wire guiding roller 512 transmitted by a transducer (not shown). After receiving the position signal, the third rotating motor 52 is operable to transmit a compensation signal to at least one of the first rotating motor 441 and the second rotating motor 442 of the wire supplying and receiving device 4 based on the position of the wire guiding roller 512, so as to fix the tension force of the sawing wire 91 within a certain range. Referring to FIG. 17, the third rotating motor 52 outputs a rated torque such that the wire guiding roller 512 bears a driving force (F_{M}) that is provided by the third rotating motor 52 and that equals two times T1 (i.e., the tension force of the sawing wire 91), allowing the wire guiding roller 512 to be fixed at a certain position. When the wire guiding roller 512 moves along the second horizontal direction (Y) (i.e., the tension force of the sawing wire 91 changes), the rated torque is changed accordingly based on the abovementioned compensation mechanism, thereby maintaining the slicing capacity of the sawing wire 91.

Since the tension force of the sawing wire 91 is exerted in a direction parallel to the moving path (L2) of the wire guiding roller 512, the tension compensation mechanism has a structure simpler than that of the tension compensation mechanism of Taiwanese Invention Patent No. I488725, which requires rather complicated formulas. In other words, the compensation mechanism of this disclosure does not have any oblique force components, allowing a simplified calculation. Moreover, the output torque of the third rotating motor 52 is smaller than that of the motor of TW I488725.

The present disclosure provides two embodiments of a method for controlling the tension direction of the sawing wire 91 to be parallel to the moving path (L2) of the wire guiding roller 512.

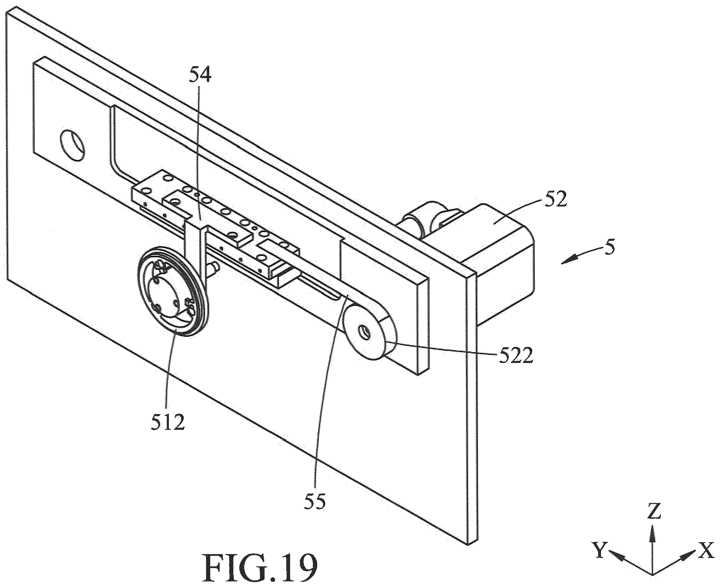

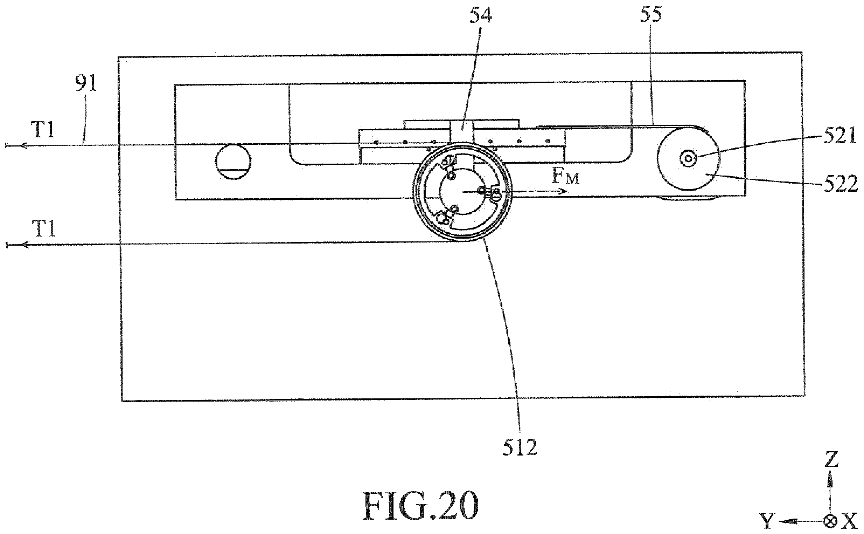

Referring to FIGS. 4, 19 and 20, in a first embodiment of the method, one of the tension adjusting devices 5 further includes a tension roller 522 that is fixedly sleeved on the output shaft 521 of the third rotating motor 52 and that is rotatable by the third rotating motor 52, a wire guiding roller installation seat 54 that is movable along the second horizontal direction (Y) relative to the corresponding one of the roller installation sections 13 and that is for the wire guiding roller 512 to be rotatably mounted thereto, and a first connecting member 55 that extends along the second horizontal direction (Y) and that interconnects the wire guiding roller installation seat 54 and the first tension roller 522. In this embodiment, the tension force (T1) of the sawing wire 91 substantially equals to 1/2 of the output torque of the third rotating motor 52 times the radius of the first tension roller 522.

Referring to FIGS . 4, 21 and 22, in a second embodiment of the method, one of the tension adjusting devices 5 further includes a fourth rotating motor 56 that is disposed on the corresponding one of the roller installation sections 13, that is spaced apart from the third rotating motor 52 and that includes an output shaft 561; a second tension roller 562 that is connected to the output shaft 561 of the fourth rotating motor 56 and that is rotatable by the output shaft 561 of the fourth rotating motor 56, such that the wire guiding roller installation seat 54 that is disposed between the first tension roller 522 and the second tension roller 562; and a second connecting member 57 that interconnects the wire guiding roller installation seat 54 and the second tension roller 562. Each of the first and second connecting members 55, 57 extends in a direction parallel to the moving path (L2) of the wire guiding roller 512. Each of the first and second connecting members 55, 57 may be a steel cable or a belt. In this embodiment, the output torque of the third rotating motor 52 is not equal to that of the fourth rotating motor 56. The tension force (T1) of the sawing wire 91 substantially equals to 1/2 of the output torque of the third rotating motor 52 times the radius of the first tension roller 522 minus the output torque of the fourth rotating motor 56 times the radius of the second tension roller 562.

It is worth mentioning that, in practice, a load cell will be provided to measure the actual tension force of the sawing wire 91 since the tension force of the sawing wire 91 will change each time the sawing wire 91 slices the ingot 92 or passes any of the components of the wire supplying and receiving device 4. In this embodiment, since there are two motors provided (i.e., the third rotating motor 52 and the fourth rotating motor 56), the actual tension force of the sawing wire 91 can be obtained by measuring the net force provided by the third and fourth rotating motors 52, 56, allowing omission of the load cell.

In this embodiment, each of the first rotating motor 441, the second rotating motor 442, the third rotating motor 52 and the fourth rotating motor 56 is a servo motor. Each of the third rotating motor 52 and the fourth rotating motor 56 is operable to transmit a compensation signal to at least one of the first rotating motor 441 and the second rotating motor 442 of the wire supplying and receiving device 4 based on the position of the wire guiding roller 512, so as to fix the tension force of the sawing wire 91 within a certain range, ensuring qualities of wafers made by slicing the ingot 92.

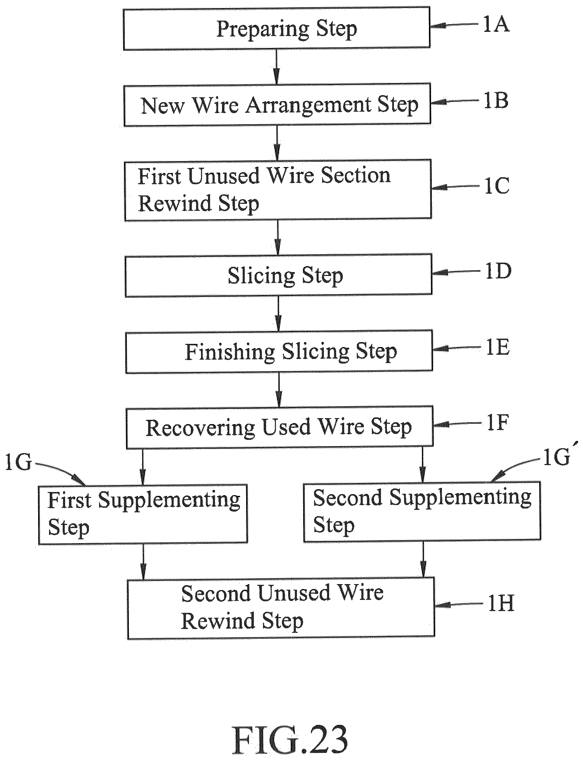

FIG. 23 is a flow chart of a first embodiment of a method of slicing ingot according to the present disclosure, which includes the following steps.

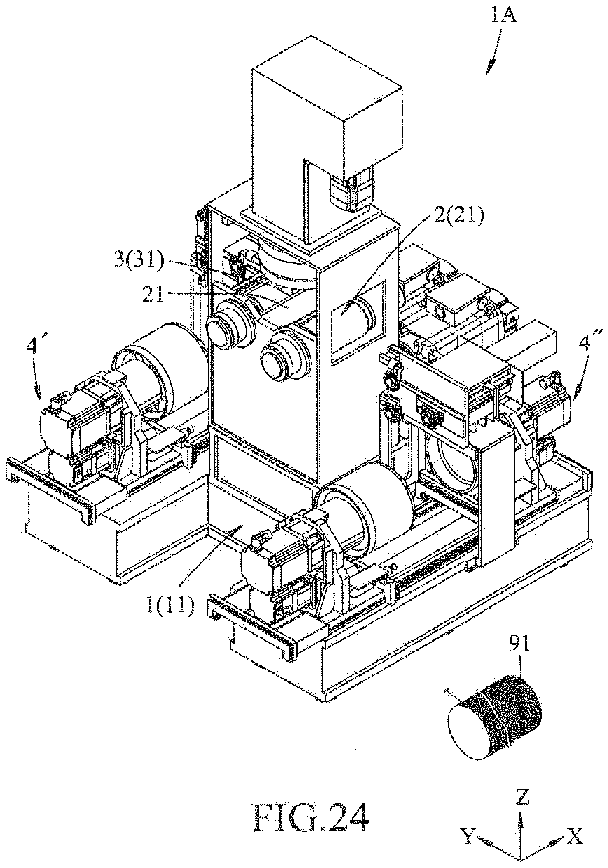

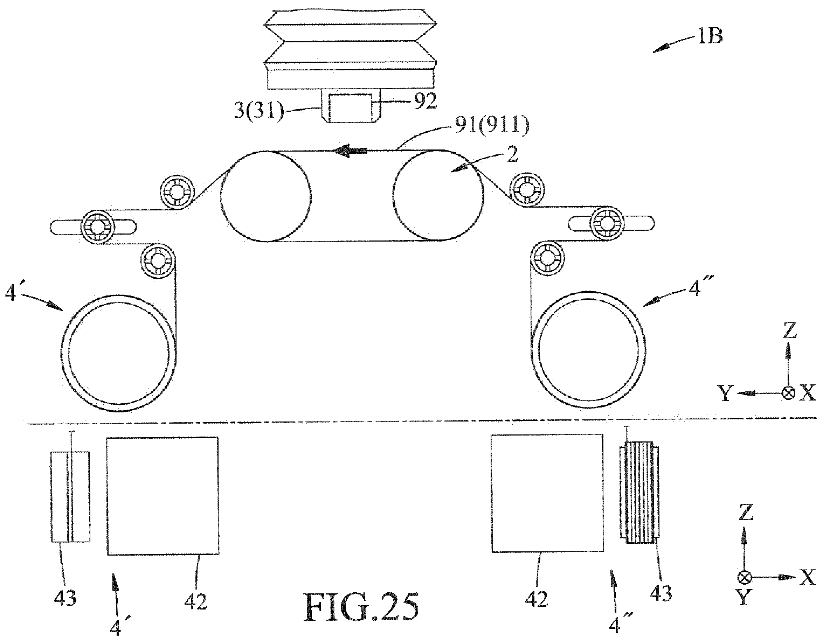

Referring to FIGS. 23 and 24, a preparing step 1A is provided to prepare a bundle of the sawing wire 91, the roller device 2 for the sawing wire 91 to be wound thereon and for driving movement of the sawing wire 91, a feeding device 3 for the ingot 92 (see FIG. 25) to be mounted thereon and for moving the ingot 92 vertically relative to the roller device 2, and two of the wire supplying and receiving devices 4 that are respectively disposed at opposite sides of the roller device 2 and the machine bed 1. The feeding device 3 is disposed on the machine bed 1 and includes the feeding seat 31 adapted for the ingot 92 to be mounted thereon. The roller device 2 includes two of the main rollers 21 that are spaced apart from each other in the second horizontal direction (Y). The wire supplying and receiving devices 4 are respectively defined as a first wire supplying and receiving device 4' and a second wire supplying and receiving device 4".

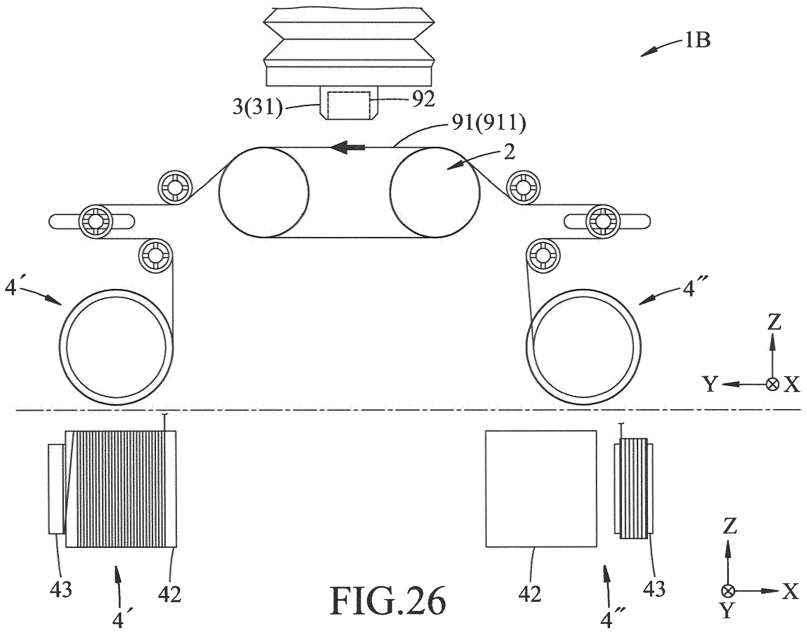

Referring to FIGS. 23, 25 and 26, a new wire arrangement step 1B includes:
converting each of the first and second wire supplying and receiving devices 4', 4" into the disconnected state (see FIG. 25);
winding the bundle of the sawing wire 91 onto the second wire winding unit 43 of the second wire supplying and receiving device 4" (see FIG. 25);
winding the sawing wire 91 on the main rollers 21 to form the wire net 911 between the main rollers 21 (see FIG. 25);
fastening an end of the sawing wire 91 to the second wire winding unit 43 of the first wire supplying and receiving device 4' (see FIG. 25);
converting the first wire supplying and receiving device 4' into the connected state (see FIG. 26); and
rotating the main rollers 21 of the roller device 2 such that a first length of the sawing wire 91 is unwound from the second wire winding unit 43 of the second wire supplying and receiving device 4" and is wound onto the first wire winding unit 42 of the first wire supplying and receiving device 4' (see FIG. 26). The first length of the sawing wire 91 is for slicing the ingot 92.

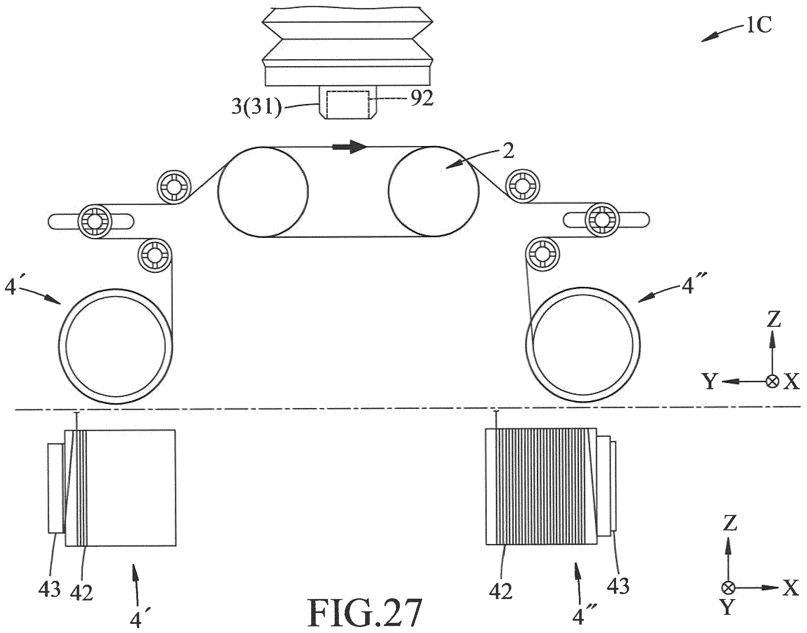

Referring to FIGS. 23 and 27, a first unused wire section rewind step 1C includes converting the second wire supplying and receiving device 4" into the connected state; and rotating the main rollers 21 of the roller device 2 such that a second length of the sawing wire 91 is unwound from the first wire winding unit 42 of the first wire supplying and receiving device 4' and is wound onto the first wire winding unit 42 of the second wire supplying and receiving device 4".

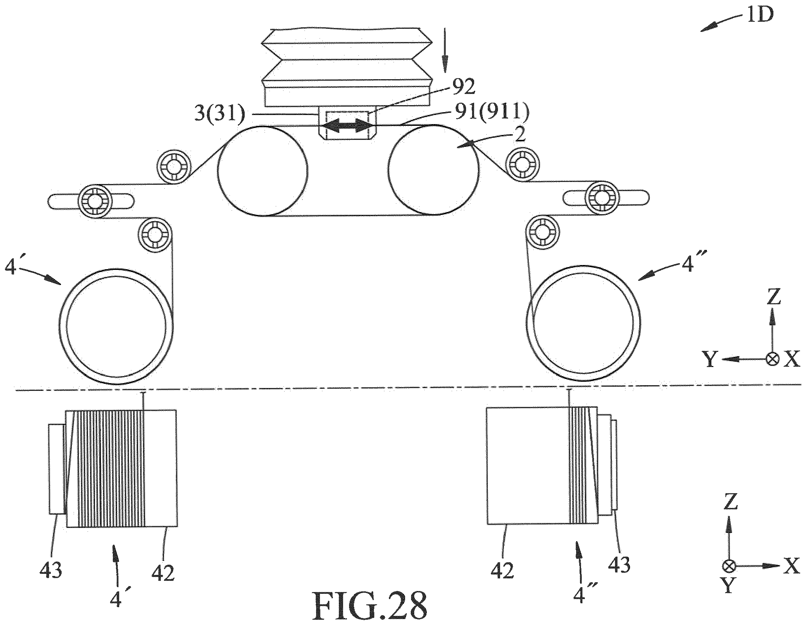

Referring to FIGS. 23 and 28, a slicing step 1D includes moving the feeding device 3 downwardly toward the wire net 911 and rotating the main rollers 21 of the roller device 2 in alternate clockwise and counterclockwise directions to slice the ingot 92 into a plurality of wafers (not shown). Each time each of the main rollers 21 is rotated reciprocally, a third length of the sawing wire 91 is unwound from the first wire winding unit 42 of the second wire supplying and receiving device 4" and is wound onto the first wire winding unit 42 of the first wire supplying and receiving device 4'.

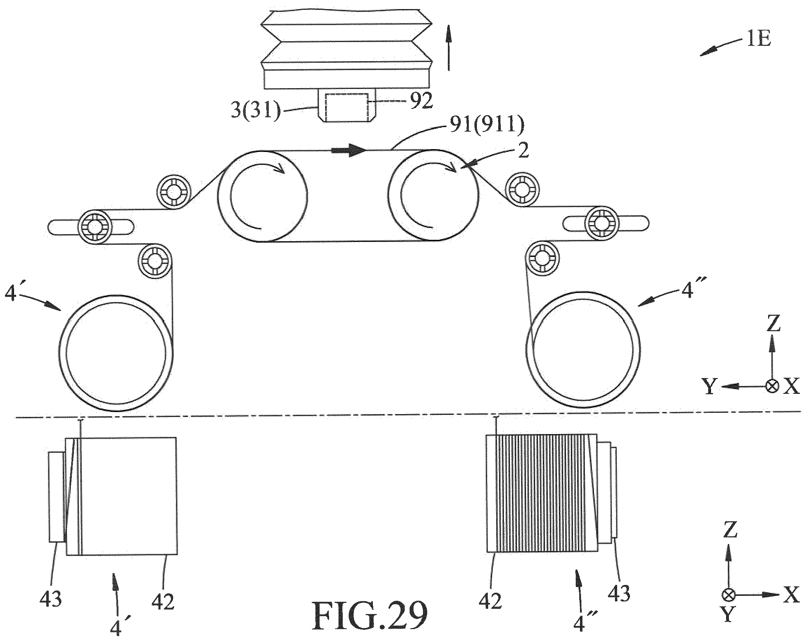

Referring to FIGS. 23 and 29, a finishing slicing step 1E includes, after the step 1D, moving the feeding device 3 and the wafers upwardly, and rotating the main rollers 21 of the roller device 2 to move the sawing wire 91 toward the second wire supplying and receiving device 4" such that a fourth length of the sawing wire 91 for slicing the ingot 91 is unwound from the first wire winding unit 42 of the first wire supplying and receiving device 4' and is wound onto the first wire winding unit 42 of the second wire supplying and receiving device 4" until the wafers are spaced apart from the wire net 911 of the sawing wire 91.

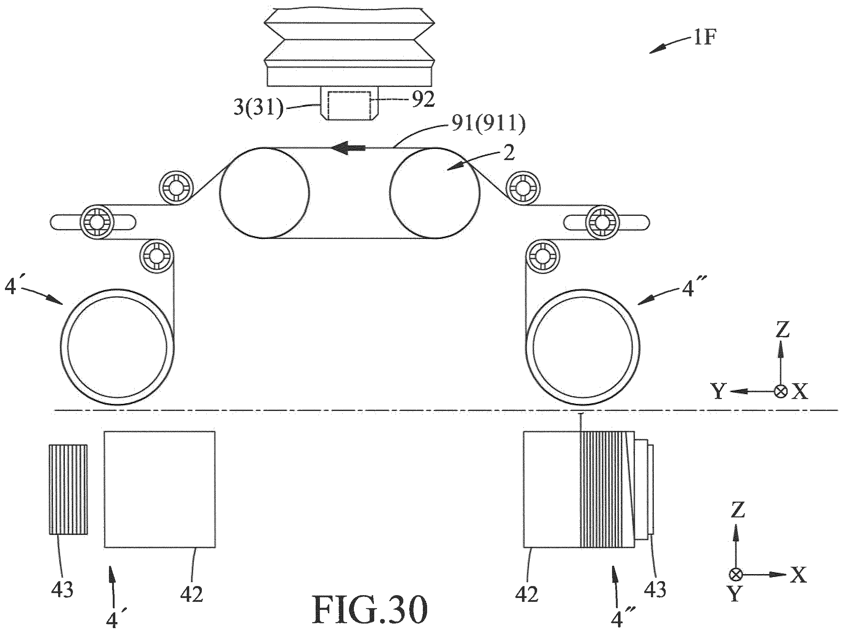

Referring to FIGS. 23 and 30, a recovering used wire section step 1F includes, after the step IE, converting the first wire supplying and receiving device 4' into the disconnected state, and rotating the main rollers 21 of the roller device 2 to move the sawing wire 91 toward the first wire supplying and receiving device 4' such that a fifth length of the sawing wire 91 for slicing the ingot 91 is unwound from the first wire winding unit 42 of the second wire supplying and receiving device 4" and is wound onto the second wire winding unit 43 of the first wire supplying and receiving device 4'.

After step 1F, there might be an unused section of sawing wire 91 on the first wire winding unit 42 of the second wire supplying and receiving device 4" or no unused section of the sawing wire 91 on the first wire winding unit 42 of the second wire supplying and receiving device 4". Therefore, there are two follow-up steps after step 1F respectively for these two situations.

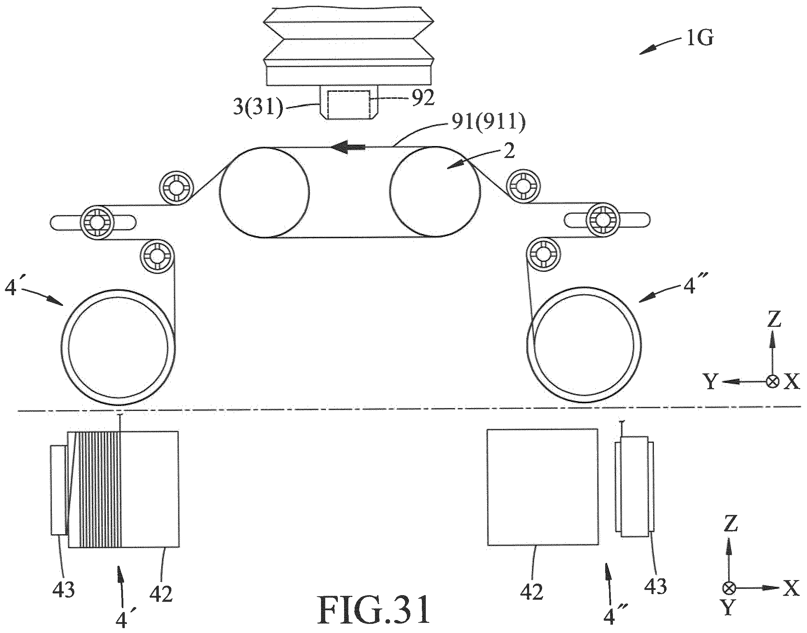

Referring to FIGS. 23 and 31, a first supplementing step 1G includes after the step 1F and when there is no unused section of the sawing wire 91 on the first wire winding unit 42 of the second wire supplying and receiving device 4", converting the first wire supplying and receiving device 4' into the connected state, converting the second wire supplying and receiving device 4" into the disconnected state, and rotating the main rollers 21 such that the sixth length of the sawing wire 91 is unwound from the second wire winding unit 43 of the second wire supplying and receiving device 4" and is wound onto the first wire winding unit 42 of the first wire supplying and receiving device 4'.

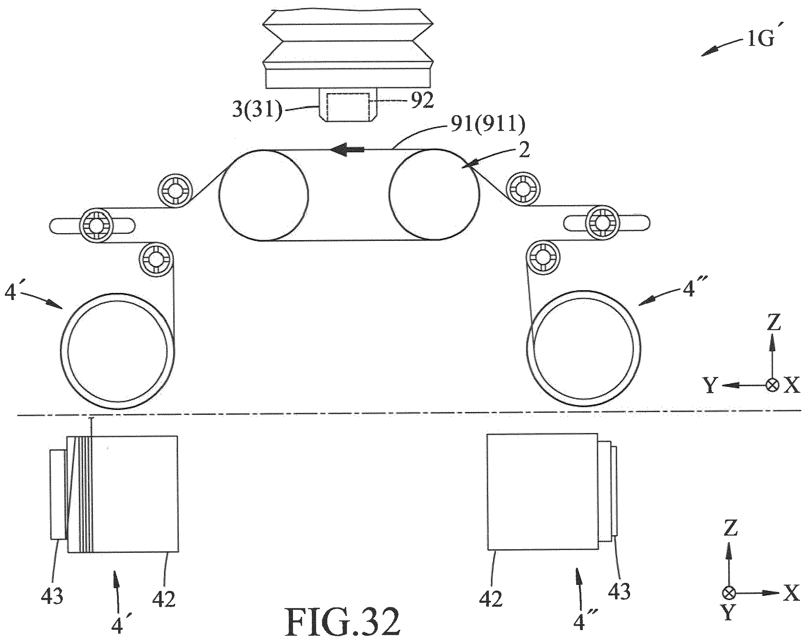

Referring to FIGS. 23 and 32, alternatively, a second supplementing step 1G' includes after the step 1F and when there is unused section of the sawing wire 91 on the first wire winding unit 42 of the second wire supplying and receiving device 4", converting the first wire supplying and receiving device 4' into the connected state, rotating the main rollers 21 of the roller device 2 until there is no unused section of the sawing wire 91 left on the first wire winding unit 42 of the second wire supplying and receiving device 4", converting the second wire supplying and receiving device 4" into the disconnected state, and rotating the main rollers 21 of the roller device 2 such that the seventh length of the sawing wire 91 is unwound from the second wire winding unit 43 of the second wire supplying and receiving device 4" and is wound onto the first wire winding unit 42 of the first wire supplying and receiving device 4'.

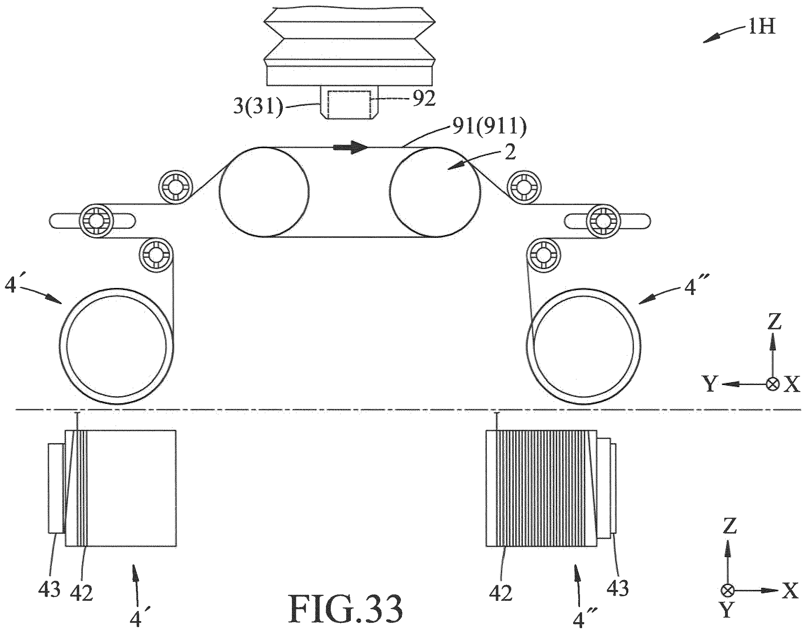

Referring to FIGS. 23 and 33, a second unused wire rewind step 1H includes, after one of the steps 1G or 1G', converting the second wire supplying and receiving device 4" into the connected state, and rotating the main rollers 21 of the roller device 2 such that an eighth length of the sawing wire 91 that is used for performing step 1D is unwound from the first wire winding unit 42 of the first wire supplying and receiving device 4' and is wound onto the first wire winding unit 42 of the second wire supplying and receiving device 4".

Afterwards, the ingot slicing wire saw 100 is ready for performing another slicing action.

It is worth mentioning that the abovementioned method effectively winds used and unused sections of the sawing wires 91 respectively on the first and second wire winding units 42, 43 of the first wire supplying and receiving device 4' and the second wire supplying and receiving device 4", thereby alleviating the abovementioned wire wear issue.

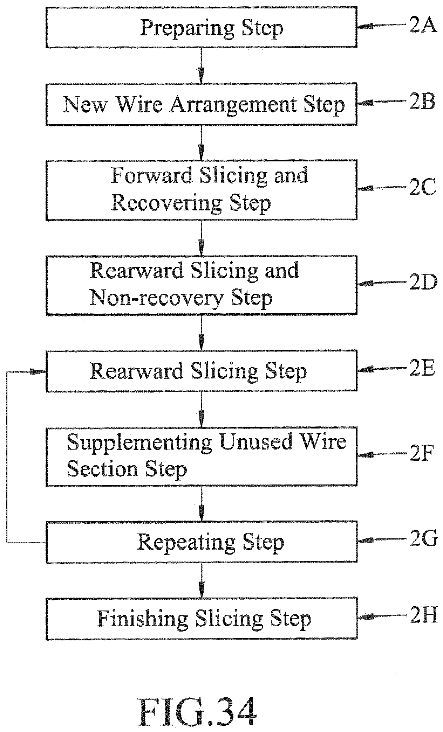

FIG. 34 is a flow chart of a second embodiment of the method of slicing ingot according to the present disclosure, which includes the following steps.

Referring to FIG.34, steps 2A and 2B are identical to the steps 1A and 1B, respectively, and description thereof is omitted for the sake of brevity.

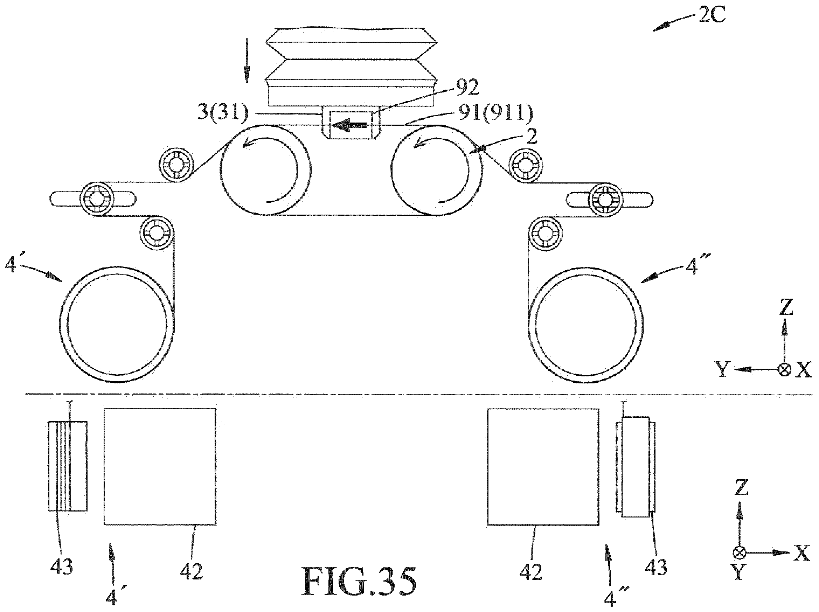

Referring to FIGS. 34 and 35, a forward slicing and recovery step 2C includes moving the feeding device 3 downwardly toward the wire net 911 and rotating the main rollers 21 of the roller device 2 to move the sawing wire 91 toward the first wire supplying and receiving device 4', such that a first length of the sawing wire 91 is unwound from the second wire winding unit 43 of the second wire supplying and receiving device 4" and is wound onto the second wire winding unit 43 of the first wire supplying and receiving device 4', so that the wire net 911 is moved forwardly to slice the ingot 92.

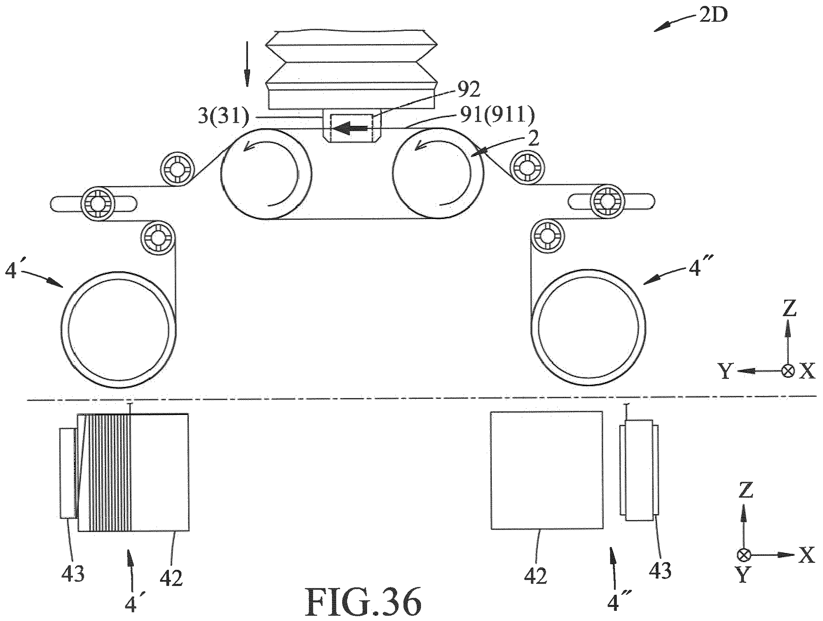

Referring to FIGS. 34 and 36, a rearward slicing and non-recovery step 2D includes converting the first wire supplying and receiving device 4' into the connected state, and rotating the main rollers 21 of the roller device 2 to move the sawing wire 91 toward the first wire supplying and receiving device 4', such that a second length of the sawing wire 91 is unwound from the second wire winding unit 43 of the second wire supplying and receiving device 4" and is wound onto the first wire winding unit 42 of the first wire supplying and receiving device 4', so that the wire net 911 is moved forwardly to slice the ingot 92.

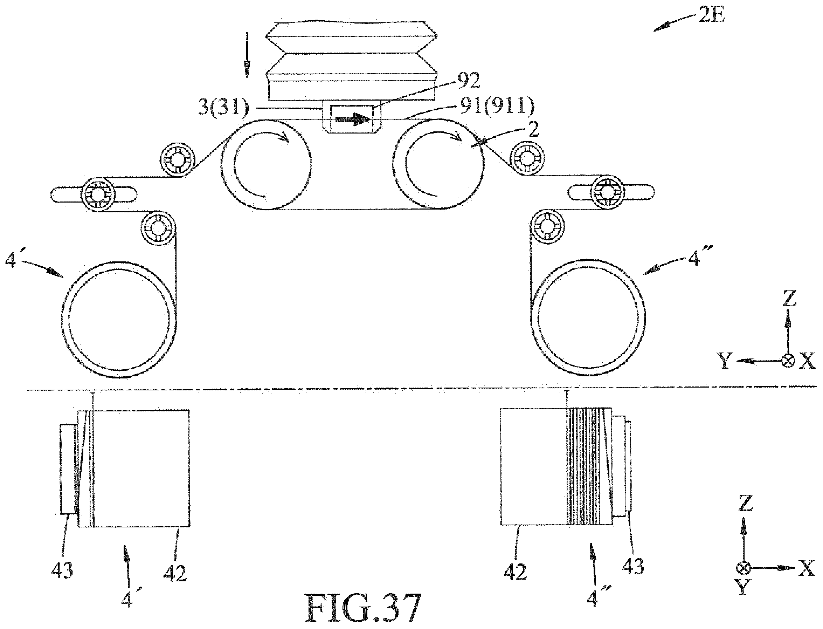

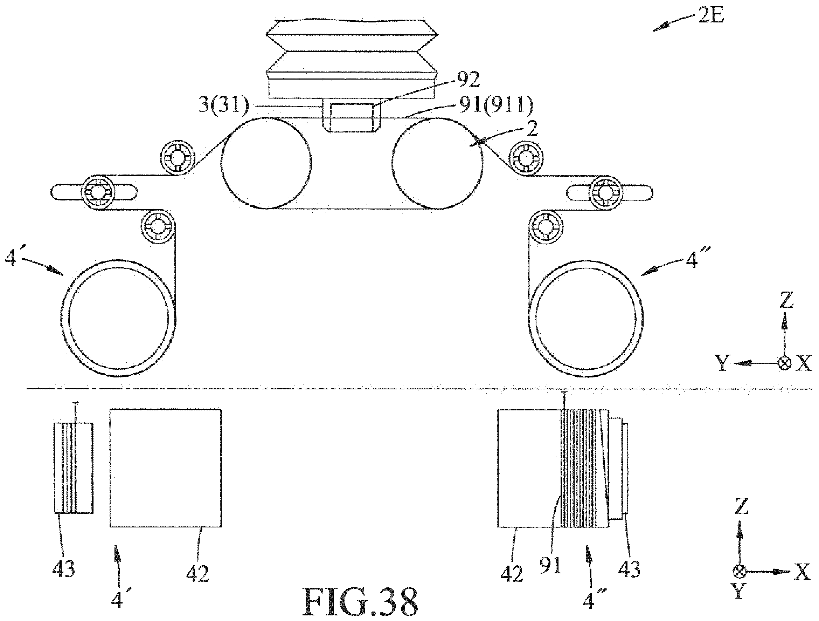

Referring to FIGS. 34, 37 and 38, a rearward slicing step 2E includes converting the second wire supplying and receiving device 4" into the connected state, and rotating the two main rollers 21 of the roller device 2 to move the sawing wire 91 toward the second wire supplying and receiving device 4" such that the wire net 911 is moved rearwardly to slice the ingot 92 and a third length of the sawing wire 91 is unwound from the first wire winding unit 42 of the first wire supplying and receiving device 4' and is wound onto the first wire winding unit 42 of the second wire supplying and receiving device 4", and converting the first wire supplying and receiving device 4' into the disconnected state.

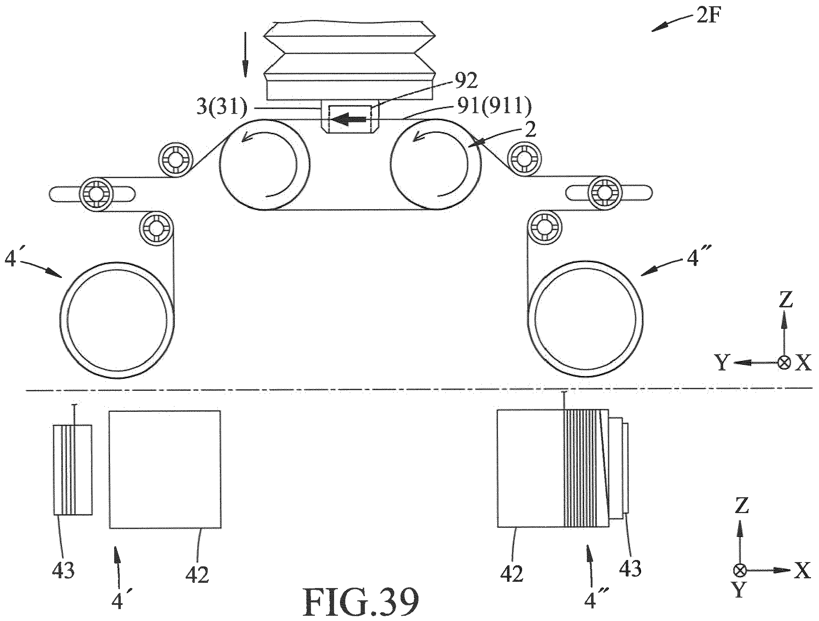

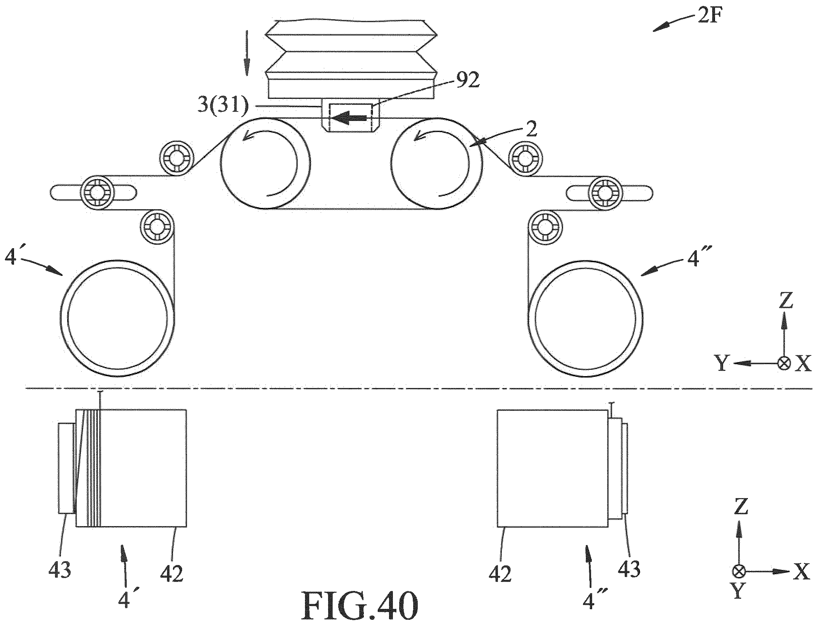

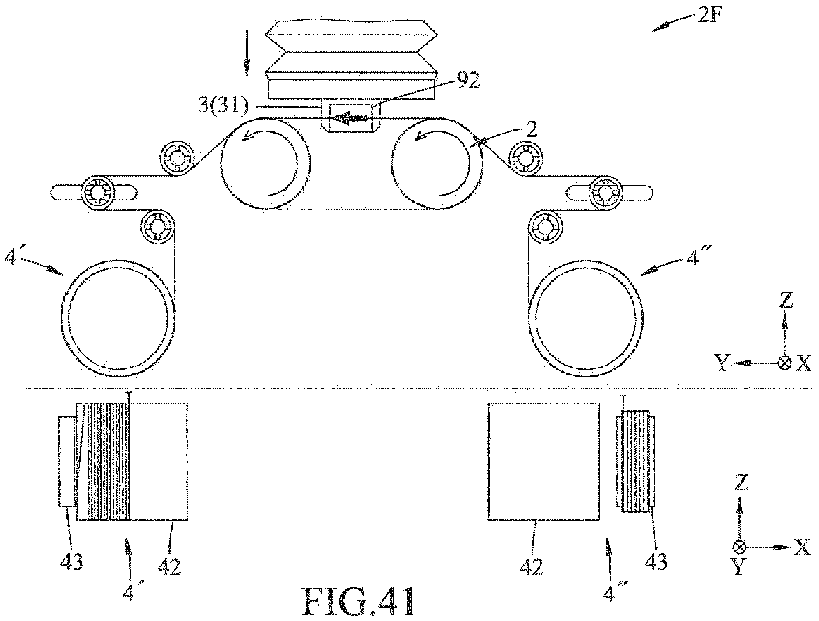

Referring to FIGS. 34 and 39 to 41, a supplementing unused wire section step 2F includes rotating the main rollers 21 of the roller device 2 to move the sawing wire 91 toward the first wire supplying and receiving device 4', such that the wire net 911 slices the ingot 92 and a fourth length of the sawing wire 91 is unwound from the first wire winding unit 42 of the second wire supplying and receiving device 4" and is wound onto the second wire winding unit 43 of the first wire supplying and receiving device 4' (see FIG. 39), converting the first wire supplying and receiving device 4' into the connected state (see FIG. 40), converting the second wire supplying and receiving device 4" into the disconnected state (see FIG. 41), rotating the main rollers 21 of the roller device 2 to allow a fifth length of the sawing wire 91 to be unwound from the second wire winding unit 42 of the second wire supplying and receiving device 4" and wound onto the first wire winding unit 42 of the first wire supplying and receiving device 4' (see FIG. 41).

A repeating step 2G includes repeating steps 2E and 2F until the ingot 92 is sliced into the wafers.

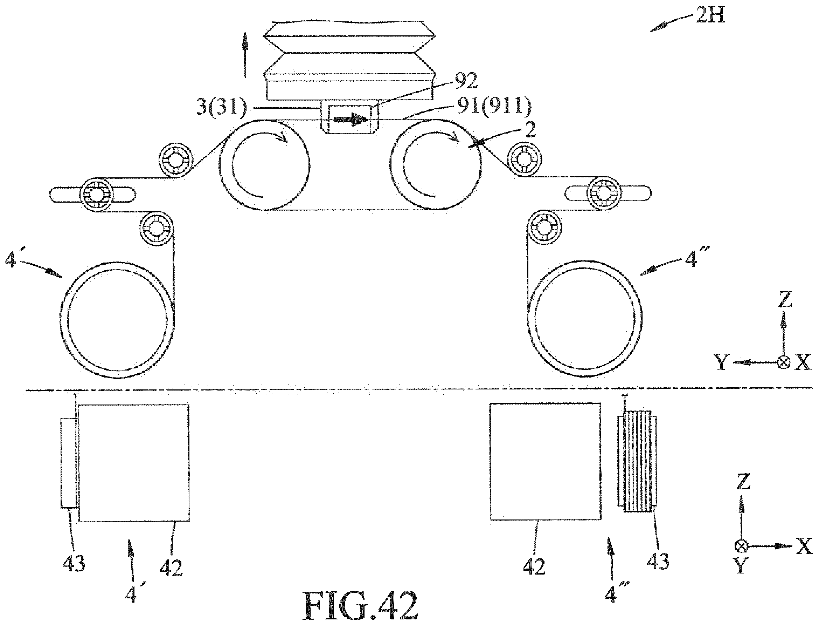

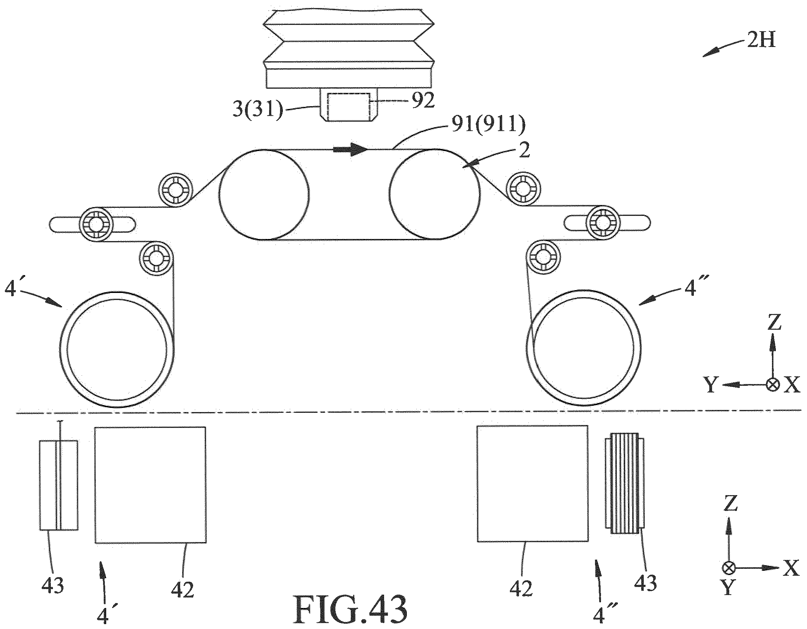

Referring to FIGS. 34, 42 and 43, a finishing slicing step 2H includes moving the feeding device 3 and the wafers upwardly and away from the wire net 911 of the sawing wire 91, rotating the main rollers 21 of the roller device 2 to move the sawing wire 91 toward the second wire supplying and receiving device 4" such that a sixth length of the sawing wire 91 is unwound from the first wire winding unit 42 of the first wire supplying and receiving device 4' and is wound onto the second wire winding unit 43 of the second wire supplying and receiving device 4" (see FIG. 42), converting the first wire supplying and receiving device 4' into the disconnected state (see FIG. 43), and rotating the main rollers 21 of the roller device 2 such that a seventh length of the sawing wire 91 is unwound from the second wire winding unit 43 of the first wire supplying and receiving device 4' and is wound onto the second wire winding unit 43 of the second wire supplying and receiving device 4" (see FIG. 43).

The second embodiment of the method of slicing ingot according to the present disclosure collects the used section of the sawing wire 91 on the second wire winding unit 43 of the second wire supplying and receiving device 4". Therefore, if wire breakage (especially breakage of the used section of the sawing wire 91) happens, a user only needs to take the used sawing wire 91 from the second wire winding unit 43 of the first wire supplying and receiving device 4', followed by fixing an end of the unused sawing wire 91 to the second wire winding unit 43 of the first wire supplying and receiving device 4', which is a simplified and cost-effective method.

The second embodiment of the method of slicing ingot according to the present disclosure also includes less steps of arranging unused sections and used sections of the sawing wire 91 on the first and second wire supplying and receiving devices 4', 4", thereby improving slicing efficiency.

To sum up, the ingot slicing wire saw 100 and the method of slicing ingot according to the present disclosure both contribute to reducing total length of sawing wire required for cutting, improving sliced wafer quality, shortening process time, thereby improving slicing efficiency and lowering costs.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A wire supplying and receiving device (4) for a wire saw (100), said wire supplying and receiving device (4) being **characterized by**:
a moving unit (41) including a rail (411) that extends along a first horizontal direction (X);
a first wire winding unit (42) that is disposed on said rail (411) and that is rotatable about an axis (L1) parallel to the first horizontal direction (X); and
a second wire winding unit (43) that is disposed on said rail (411) and that is rotatable about the axis (L1),
wherein at least one of said first wire winding unit (42) and said second wire winding unit (43) is movable on said rail (411) along the first horizontal direction (X); and
wherein said wire supplying and receiving device (4) is convertible between a connected state, where said first wire winding unit (42) and said second wire winding unit (43) are adjacent to each other, and a disconnected state, where said first wire winding unit (42) and said second wire winding unit (43) are spaced apart from each other in the first horizontal direction (X).

2. The wire supplying and receiving device (4) as claimed in claim 1, **characterized in that** :
said moving unit (41) further includes a first moving seat (412) and a second moving seat (413) that are movably disposed on said rail (411);
said first wire winding unit (42) and said second wire winding unit (43) are rotatably and respectively mounted to said first moving seat (412) and said second moving seat (413);
in the connected state, said first moving seat (412) and said second moving seat (413) are adjacent to each other;
when said wire supplying and receiving device (4) is converted from the disconnected state into the connected state, said first and second moving seats (412, 413) are moved toward each other along the first horizontal direction (X); and
when said wire supplying and receiving device (4) is converted from the connected state into the disconnected state, said first moving seat (412) and said second moving seat (413) are moved away from each other.

3. The wire supplying and receiving device (4) as claimed in claim 1, **characterized in that**:
said first wire winding unit (42) includes a first rotating member (421) that extends along the first horizontal direction (X), and at least one wire guiding member (62) that extends from an end surface of said first rotating member (421);
said second wire winding unit (43) includes a second rotating member (431) that extends along the first horizontal direction (X);
in the connected state, said first rotating member (421) and said second rotating member (431) are adjacent to each other; and
in the disconnected state, said first rotating member (421) and said second rotating member (431) are spaced apart from each other.

4. The wire supplying and receiving device (4) as claimed in claim 3, **characterized in that**, in the connected state, said first rotating member (421) surrounds said second rotating member (431).

5. The wire supplying and receiving device (4) as claimed in claim 1, **characterized in that**:
said first wire winding unit (42) includes a first rotating member (421) that extends along the first horizontal direction (X);
said second wire winding unit (43) includes a second rotating member (431) that extends along the first horizontal direction (X);
in the connected state, said first rotating member (421) and said second rotating member (431) abut against each other; and
in the disconnected state, said first rotating member (421) and said second rotating member (431) are spaced apart from each other.

6. The wire supplying and receiving device (4) as claimed in claim 1, **characterized in that**:
said moving unit (41) further includes a first moving seat (412) and a second moving seat (413) that are movably disposed on said rail (411);
said first wire winding unit (42) includes a first rotating member (421) that is rotatably mounted to said first moving seat (412);
said second wire winding unit (43) includes a second rotating member (431) that is rotatably mounted to said second moving seat (413);
in the connected state, said first moving seat (412) and said second moving seat (413) are adjacent to each other, and an end of said first rotating member (421) is sleeved on an end of said second rotating member (431) ; and
in the disconnected state, said first moving seat (412) and said second moving seat (413) are spaced apart from each other.

7. The wire supplying and receiving device (4) as claimed in claim 6, **characterized in that**:
said first rotating member (421) is hollow and has an open end (422) for said second rotating member (431) to extend therethrough;
in the connected state, an inner surrounding surface (423) of said first rotating member (421) is spaced apart from an outer surrounding surface (432) of said second rotating member (431); and
said first wire winding unit (42) further includes at least one wire guiding member (62) that extends from an end surface of said first rotating member (421).

8. The wire supplying and receiving device (4) as claimed in claim 6, **characterized in that**:
said first rotating member (421) is hollow and has an open end (422) for said second rotating member (431) to extend therethrough;
said first wire winding unit (42) further includes a wire guiding seat (6) that is disposed at said open end (422) of said first rotating member (421);
said wire guiding seat (6) includes a surrounding wall (61) that extends about the axis (L1), and at least two wire guiding members (62) that are angularly disposed on said surrounding wall (61); and
said surrounding wall (61) has a first side portion (611) that is connected to said open end (422) of said first rotating member (421), and a second side portion (612) that is opposite to said first side portion (611), said wire guiding members (62) being disposed on said second side portion (612).

9. The wire supplying and receiving device (4) as claimed in claim 8, **characterized in that** each of said wire guiding members (62) has an inner side surface (621) that is proximate to the axis (L1), and at least one guiding surface (622) that extends from an end of said inner side surface (621) away from the axis (L1).

10. The wire supplying and receiving device (4) as claimed in claim 9, **characterized in that**:
each of said wire guiding members (62) has two of said guiding surfaces (622) that respectively extend from opposite ends of said inner side surface (621) of said wire guiding member (62) away from the axis (L1) and toward each other;
each of said wire guiding members (62) further has an outer side surface (623) that interconnects said guiding surfaces (622) and that is spaced apart from said inner side surface (621); and
each of said guiding surfaces (622) has a trapezoid shape, and has a wide base side (624) that is connected to said outer side surface (623) and a narrow base side (625) that is connected to said inner side surface (621) .

11. The wire supplying and receiving device (4) as claimed in claim 10, **characterized in that**:
said second side portion (612) of said surrounding wall (61) of said wire guiding seat (6) has a plurality of connecting surfaces (613), each of which is connected between adjacent two of said wire guiding members (62) ;
said second side portion (612) of said surrounding wall (61) of said wire guiding seat (6) further has a plurality of extending surfaces (614), each of said extending surfaces (614) being connected to a corresponding one of said connecting surfaces (613); and
each of said extending surfaces (614) cooperates with an adjacent one of said guiding surfaces (622) of a corresponding one of said wire guiding members (62) to define a wire guiding grooves (626) adapted for extension of said sawing wire (91) therethrough.

12. An ingot slicing wire saw (100) adapted to be mounted with a sawing wire (91) for slicing an ingot (92), said ingot slicing wire saw (100) being **characterized by**:
a machine bed (1);
a roller device (2) that includes two main rollers (21) rotatably connected to said machine bed (1) and horizontally spaced apart from each other;
a feeding device (3) that is disposed on said machine bed (1) and above said roller device (2), and that includes a feeding seat (31) adapted for the ingot (92) to be mounted thereon and operable to carry the ingot (92) to move between said main rollers (21); and
two of said wire supplying and receiving devices (4) as claimed in claim 1,
wherein said wire supplying and receiving devices (4) are respectively disposed at opposite sides of said machine bed (1);
wherein the sawing wire (91) is wound on said wire supplying and receiving devices (4) and said main rollers (21) of said roller device (2) to form a wire net (911) having a plurality of sawing sections spanning a space between said main rollers (21) and adapted for slicing the ingot (92).

13. The ingot slicing wire saw (100) as claimed in claim 12, **characterized in that**:
said machine bed (1) includes a base section (11), a slicing seat section (12) that is disposed on said base section (11), that extends upwardly along an height direction (Z) and that is mounted with said roller device (2), and two roller installation sections (13) that are respectively disposed at opposite sides of said slicing seat section (12) along a second horizontal direction (Y) perpendicular to the height direction (Z) and the first horizontal direction (X);
said ingot slicing wire saw (100) further comprises two tension adjusting devices (5) that are respectively disposed on said roller installation sections (13), each of said tension adjusting devices (5) including a pulley unit (51) that is disposed between said roller device (2) and a corresponding one of said wire supplying and receiving devices (4) and that is adapted for adjusting extending direction of the sawing wire (91);
said pulley unit (51) of each of said tension adjusting devices (5) includes a wire guiding roller (512) that is configured to be movable along a moving path (L2) parallel to the second horizontal direction (Y); and
the sawing wire (91) extends around said wire guiding roller (512) of said pulley unit (51) of each of said tension adjusting devices (5) such that the sawing wire (91) bears a tension force when slicing the ingot (92), the tension force being parallel to the moving path (L2) .

14. The ingot slicing wire saw (100) as claimed in claim 12, **characterized in that**:
said roller device (2) further includes two auxiliary rollers (22) that are disposed below said feeding device (3) and that are disposed between said main rollers (21) ;
lowermost side of each of said auxiliary rollers (22) is not higher than uppermost side of each of said main rollers (21);
diameter of each of said auxiliary rollers (22) is smaller than one-half of diameter of each of said main rollers (21); and
the sawing wire (91) is wound on said wire supplying and receiving devices (4), said main rollers (21) and said auxiliary rollers (22) to form said wire net (911) having said sawing sections spanning a space between said auxiliary rollers (22) and adapted for slicing the ingot (92).

15. A method for slicing an ingot (92), the method being **characterized by**:
(A) preparing a bundle of sawing wire (91), a roller device (2) for the sawing wire (91) to be wound thereon and for driving movement of the sawing wire (91), a feeding device (3) for the ingot (92) to be mounted thereon and for moving the ingot (92) vertically relative to the roller device (2), and two of the wire supplying and receiving devices (4) as claimed in claim 1 that are respectively disposed at opposite sides of the roller device (2), wherein the roller device (2) includes two main rollers (21) that are spaced apart from each other in a second horizontal direction (Y) perpendicular to the first horizontal direction (X), and the wire supplying and receiving devices (4) are respectively defined as a first wire supplying and receiving device (4') and a second wire supplying and receiving device (4") ;
(B) converting each of the first and second wire supplying and receiving devices (4', 4") into the disconnected state, winding the bundle of the sawing wire (91) onto the second wire winding unit (43) of the second wire supplying and receiving device (4"), and winding the sawing wire (91) on the main rollers (21) to form a wire net (911) between the main rollers (21), followed by fastening an end of the sawing wire (91) to the second wire winding unit (43) of the first wire supplying and receiving device (4'), followed by converting the first wire supplying and receiving device (4') into the connected state, followed by rotating the main rollers (21) of the roller device (2) such that a first length of the sawing wire (91) is unwound from the second wire winding unit (43) of the second wire supplying and receiving device (4") and is wound onto the first wire winding unit (42) of the first wire supplying and receiving device (4');
(C) converting the second wire supplying and receiving device (4") into the connected state, followed by rotating the main rollers (21) of the roller device (2) such that a second length of the sawing wire (91) is unwound from the first wire winding unit (42) of the first wire supplying and receiving device (4') and is wound onto the first wire winding unit (42) of the second wire supplying and receiving device (4"); and
(D) moving the feeding device (3) downwardly toward the wire net (911) and rotating the main rollers (21) of the roller device (2) in alternate clockwise and counterclockwise directions to slice the ingot (92) into a plurality of wafers, a third length of the sawing wire (91) is unwound from the first wire winding unit (42) of the second wire supplying and receiving device (4") and is wound onto the first wire winding unit (42) of the first wire supplying and receiving device (4').
